(19) Europäisches Patentamt / European Patent Office / Office européen des brevets

(11) **EP 4 773 346 A1**

(12) **EUROPEAN PATENT APPLICATION**
published in accordance with Art. 153(4) EPC

(43) Date of publication:
08.07.2026 Bulletin 2026/28

(21) Application number: 24860002.5

(22) Date of filing: 30.08.2024

(51) International Patent Classification (IPC):
$H01M\ 10/653^{(2014.01)}$     $H01M\ 10/613^{(2014.01)}$
$H01M\ 10/651^{(2014.01)}$     $H01M\ 10/6554^{(2014.01)}$
$H01M\ 10/6555^{(2014.01)}$     $H01M\ 10/658^{(2014.01)}$
$H01M\ 50/204^{(2021.01)}$     $H01M\ 50/227^{(2021.01)}$
$H01M\ 50/293^{(2021.01)}$

(52) Cooperative Patent Classification (CPC):
H01M 10/613; H01M 10/651; H01M 10/653;
H01M 10/6554; H01M 10/6555; H01M 10/658;
H01M 50/204; H01M 50/227; H01M 50/293;
Y02E 60/10; Y02W 30/84

(86) International application number:
PCT/JP2024/031404

(87) International publication number:
WO 2025/047977 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.08.2023  JP 2023141796
19.06.2024  JP 2024098830

(71) Applicant: Mitsubishi Chemical Corporation
Tokyo 100-8251 (JP)

(72) Inventors:
• TAKADA, Tsuyoshi
Tokyo 100-8251 (JP)
• SUZUKI, Shuji
Tokyo 100-8251 (JP)
• MATSUI, Jun
Tokyo 100-8251 (JP)
• TAKATA, Nobuaki
Tokyo 100-8251 (JP)
• HASUIKE, Masayasu
Tokyo 100-8251 (JP)
• KUROSE, Shohei
Tokyo 100-8251 (JP)

(74) Representative: Hoffmann Eitle
Patent- und Rechtsanwälte PartmbB
Arabellastraße 30
81925 München (DE)

(54) **BATTERY PACK, USE OF ADHESIVE SHEET, AND RECYCLING METHOD**

(57) Disclosed is a battery pack including a resin housing that stores a battery cell, a metal plate installed in the resin housing, and an adhesive sheet that bonds the resin housing and the metal plate. The adhesive sheet contains an easy-to-dismantle adhesive material. It is possible to provide a battery pack including an adhesive sheet that has good adhesiveness between a resin battery case (housing) and a cooling plate (metal plate) at the time of use, and allows the metal plate to be easily peeled off from the housing at the time of disassembly.

Fig. 1

EP 4 773 346 A1

**Description**

Technical Field

The present invention relates to a battery pack, the use of an adhesive sheet for use in the battery pack, and a recycling method.

Background Art

A battery pack applied to an electric vehicle, a hybrid vehicle, or the like has a structure in which a large number of battery modules including a plurality of battery cells are connected to achieve high output. Each battery cell includes a positive electrode current collector, a negative electrode current collector, a separator, an active material, and an electrolytic solution, in which charging and discharging can be repeated through an electrochemical reaction between the components.

Meanwhile, in recent years, as the need for a large-capacity structure including utilization as an energy storage source increases, a battery pack having a multi-module structure in which a large number of battery modules in which a large number of secondary batteries are connected in series or in parallel are assembled is desired.

Since a battery pack having a multi-module structure is produced in a form in which a large number of secondary batteries are densely packed in a narrow space, it is important to easily release heat generated from each secondary battery. During the charging/discharging process of the secondary battery, heat is generated through an electrochemical reaction. When the heat of the battery module generated in the charge-discharge process is not effectively removed, heat accumulation occurs, which promotes degradation of the battery module, leading to ignition or explosion in some cases.

Therefore, in the high-output and large-capacity battery module and the battery pack mounted with the battery module, a cooling plate having a cooling flow path laid on the bottom of the battery pack is disposed in order to cool the secondary battery. As the cooling plate, a metal plate formed of aluminum and the like may be installed (see, for example, PTL 1).

In the known art, a housing of a battery is made of metal; however, a housing made of resin is being used in order to reduce the weight of the battery and improve the recyclability. When a resin housing is used, a metal plate for releasing heat and an adhesive sheet for bonding the resin housing are important.

Citation List

Patent Literature

PTL 1: JP 2021-44122 A

Summary of Invention

Technical Problem

As described above, when the housing is made of resin, a metal plate for releasing heat and an adhesive sheet for bonding the metal plate and the housing made of resin are important, and since the adhesive sheet is required to adhere to different materials, a material having high adhesive strength and high thermal conductivity is required. On the other hand, considering recycling of the battery, it is necessary to disassemble the old battery, but unfortunately, it is difficult to disassemble the battery because the adhesive strength of the adhesive sheet is strong.

In view of the above issues, an object of the present invention is to provide a battery pack including an adhesive sheet that has good adhesiveness between a resin battery case (housing) and a cooling plate (metal plate) at the time of use, and allows the metal plate to be easily peeled off from the housing at the time of disassembly.

Solution to Problem

As a result of intensive studies to solve the above-described issues, the present inventors have found that the above-described issues can be solved by using an easy-to-dismantle resin material as an adhesive sheet for bonding a resin housing and a metal plate, and have completed the present invention.

Specifically, the present invention provides the following.

[1] A battery pack including:

a resin housing that stores a battery cell;
a metal plate installed in the resin housing; and
an adhesive sheet that bonds the resin housing and the metal plate, the adhesive sheet containing an easy-to-dismantle adhesive material.

[2] The battery pack according to [1], wherein the adhesive sheet has an adhesive strength reduction rate represented by Formula (1) of 15% or more before and after heating when heated at 285°C for 5 minutes:

$$((\text{adhesive strength before heating - adhesive strength after heating})/\text{adhesive strength before heating}) \times 100 \qquad (1).$$

[3] The battery pack according to [1] or [2], wherein the adhesive sheet has a thermal diffusivity reduction rate represented by Formula (2) of 4.5% or more before and after heating when heated at 285°C for 5 minutes:

$$((\text{thermal diffusivity before heating - thermal diffusivity after heating})/\text{thermal diffusivity before heating}) \times 100 \qquad (2).$$

[4] The battery pack according to any one of [1] to [3], wherein the easy-to-dismantle adhesive material contains a modified polyolefin-based resin.
[5] The battery pack according to any one of [1] to [4], wherein the easy-to-dismantle adhesive material contains a thermally expandable flame retardant and/or a thermally expandable foaming agent.
[6] The battery pack according to [4] or [5], wherein the modified polyolefin-based resin is graft-modified with an unsaturated carboxylic acid and/or a derivative thereof.
[7] The battery pack according to [5] or [6], wherein the thermally expandable flame retardant contains a phosphorus-based flame retardant.
[8] The battery pack according to any one of [5] to [7], wherein the thermally expandable flame retardant contains an intumescent flame retardant.
[9] The battery pack according to any one of [5] to [8], wherein the thermally expandable foaming agent contains a chemical foaming agent and/or a physical foaming agent, and a thermoplastic resin capsule enclosing the chemical foaming agent and/or the physical foaming agent.
[10] The battery pack according to any one of [5] to [9], wherein the easy-to-dismantle adhesive material further contains a dispersant.
[11] The battery pack according to [10], wherein the dispersant contains a copolymer of an $\alpha$-olefin and an unsaturated carboxylic acid.
[12] The battery pack according to any one of [4] to [11], wherein the easy-to-dismantle adhesive material further contains a polyethylene-based resin and/or a polypropylene-based resin.
[13] The battery pack according to any one of [1] to [12], wherein the resin housing includes a molded body containing a thermoplastic resin.
[14] The battery pack according to [13], wherein the thermoplastic resin contains at least one selected from the group consisting of polypropylene, polyethylene terephthalate, and nylon.
[15] A use of an adhesive sheet in a battery pack including a resin housing that stores a battery cell, a metal plate installed in the resin housing, and the adhesive sheet, the adhesive sheet bonding the resin housing and the metal plate, and the adhesive sheet containing an easy-to-dismantle adhesive material.
[16] The use of an adhesive sheet according to [15], wherein the adhesive sheet has an adhesive strength reduction rate represented by Formula (1) of 15% or more before and after heating when heated at 285°C for 5 minutes:

$$((\text{adhesive strength before heating - adhesive strength after heating})/\text{adhesive strength before heating}) \times 100 \qquad (1).$$

[17] The use of an adhesive sheet according to [15] or [16], wherein the adhesive sheet has a thermal diffusivity reduction rate represented by Formula (2) of 4.5% or more before and after heating when heated at 285°C for 5 minutes:

$$((\text{thermal diffusivity before heating - thermal diffusivity after heating})/\text{thermal diffusivity before heating}) \times 100 \qquad (2).$$

[18] The use of an adhesive sheet according to any one of [15] to [17], wherein the easy-to-dismantle adhesive material contains a modified polyolefin-based resin.

[19] The use of an adhesive sheet according to any one of [15] to [18], wherein the easy-to-dismantle adhesive material contains a thermally expandable flame retardant and/or a thermally expandable foaming agent.

[20] The use of an adhesive sheet according to [18] or [19], wherein the modified polyolefin-based resin is graft-modified with an unsaturated carboxylic acid and/or a derivative thereof.

[21] The use of an adhesive sheet according to [19] or [20], wherein the thermally expandable flame retardant contains a phosphorus-based flame retardant.

[22] The use of an adhesive sheet according to any one of [19] to [21], wherein the thermally expandable flame retardant contains an intumescent flame retardant.

[23] The use of an adhesive sheet according to any one of [19] to [22], wherein the thermally expandable foaming agent contains a chemical foaming agent and/or a physical foaming agent, and a thermoplastic resin capsule enclosing the chemical foaming agent and/or the physical foaming agent.

[24] The use of an adhesive sheet according to any one of [19] to [23], wherein the easy-to-dismantle adhesive material further contains a dispersant.

[25] The use of an adhesive sheet according to [24], wherein the dispersant contains a copolymer of an $\alpha$-olefin and an unsaturated carboxylic acid.

[26] The use of an adhesive sheet according to any one of [18] to [25], wherein the easy-to-dismantle adhesive material further contains a polyethylene-based resin and/or a polypropylene-based resin.

[27] A recycling method including recycling a resin housing and a metal plate from a battery pack including the resin housing that stores a battery cell, the metal plate installed in the resin housing, and an adhesive sheet, wherein

the adhesive sheet for bonding the resin housing and the metal plate contains an easy-to-dismantle adhesive material, and
the resin housing and the metal plate are peeled off and each is recycled.

[28] The recycling method according to [27], wherein the resin housing and the metal plate are peeled off by heating.

[29] The recycling method according to [28], wherein the heating is performed at 200°C or more and 350°C or less for 1 minute or more and 20 minutes or less.

Advantageous Effects of Invention

According to the present invention, it is possible to provide a battery pack including an adhesive sheet that has good adhesiveness between a resin battery case (housing) and a cooling plate (metal plate) at the time of use, and allows the metal plate to be easily peeled off from the housing at the time of disassembly.

Brief Description of Drawings

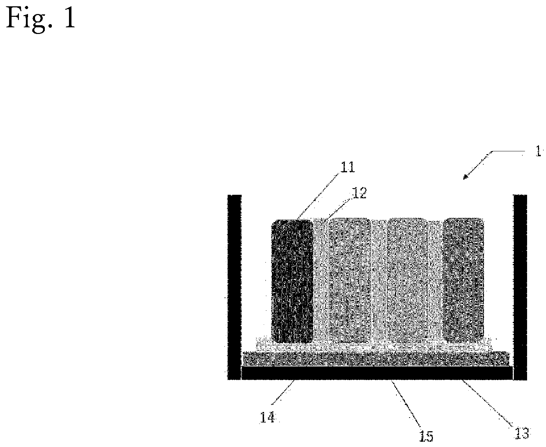

FIG. 1 is a conceptual diagram illustrating a battery pack of the present invention.

Description of Embodiments

Embodiments of the present invention (hereinafter, it may be referred to as the present embodiment) will be described in detail below. However, the present invention is not limited to the following description, which is an example of embodiments of the present invention.

[Battery Pack]

A battery pack of the present invention will be described with reference to FIG. 1.
A battery pack 1 of the present invention includes a resin battery housing 15 for storing a battery cell 11, and a metal plate (cooling plate) 13 installed in the housing. The battery housing 15 and the metal plate 13 are bonded by an adhesive sheet 14. The metal plate 13 is firmly bonded to the battery housing 15 and functions as a cooling plate. The adhesive sheet 14 achieves high adhesion between the battery housing 15 and the metal plate (cooling plate) 13 when the battery is used.
On the other hand, the adhesive sheet 14 contains an easy-to-dismantle adhesive material, and at the time of discarding the battery, by containing the material, the metal plate 13 and the battery housing 15 are easily peeled off under specific conditions, and can be separately recycled.

<Adhesive Strength>

The adhesive sheet 14 preferably has an adhesive strength reduction rate represented by Formula (1) of 15% or more before and after heating when heated at 285°C for 5 minutes:

((adhesive strength before heating - adhesive strength after heating)/adhesive strength before heating) $\times$ 100      (1).

When the adhesive strength reduction rate is 15% or more, the adhesive strength of the adhesive sheet 14 is reduced by the heat treatment, and the metal plate (cooling plate) 13 can be easily peeled off from the battery housing 15. The removed metal plate (cooling plate) 13 is recycled as a metal material, and the battery housing 15 is recycled as a resin material.

From the above-described viewpoint, the adhesive strength reduction rate is more preferably 20% or more, still more preferably 25% or more, yet still more preferably 30% or more, particularly preferably 35% or more, especially preferably 50% or more, most preferably 60% or more.

On the other hand, the upper limit of the adhesive strength reduction rate is not particularly limited as long as it is 100% or less, and it may be 99% or less, 95% or less, 93% or less, or 90% or less.

<Thermal Diffusivity>

The adhesive sheet 14 preferably has a thermal diffusivity reduction rate represented by Formula (2) of 4.5% or more before and after heating when heated at 285°C for 5 minutes:

((thermal diffusivity before heating - thermal diffusivity after heating)/thermal diffusivity before heating) $\times$ 100      (2).

When the thermal diffusivity reduction rate is 4.5% or more, the thermal conductivity of the adhesive sheet 14 is deteriorated by the heat treatment. The metal plate (cooling plate) 13 can be easily peeled off from the battery housing 15 by the heat treatment. The removed metal plate (cooling plate) 13 is recycled as a metal material, and the battery housing 15 is recycled as a resin material.

From the above-described viewpoint, the thermal diffusivity reduction rate is more preferably 5% or more, still more preferably 7% or more, yet still more preferably 10% or more, particularly preferably 13% or more, especially preferably 20% or more.

On the other hand, the upper limit of the thermal diffusivity reduction rate is not particularly limited as long as it is 100% or less, and it may be 90% or less, 70% or less, or 50% or less.

The thermal conductivity is an amount indicating the proportion of the speed at which the thermal energy is transferred when a steady temperature gradient is present. The thermal diffusivity is an amount indicating the speed at which the temperature distribution is alleviated to reach a thermal equilibrium state.

The relationship between the thermal conductivity and the thermal diffusivity is as follows.

Thermal conductivity ($\lambda$) = density ($\rho$) $\times$ specific heat (C) $\times$ thermal diffusivity ($\alpha$)

<Adhesive Sheet>

In the battery pack of the present invention, an important constituent is the adhesive sheet 14. The adhesive strength of the adhesive sheet 14 is changed by heating as described above, whereby the effect of the present invention is achieved. That is, in the stage of use as a battery, sufficient cooling is performed for firmly bonding the battery housing 15 and the metal plate (cooling plate) 13. On the other hand, at the time of discarding the battery, the adhesive sheet 14 is for example expanded by applying a stimulus such as heating, so that the adhesive strength between the metal plate (cooling plate) 13 and the battery housing 15 is reduced, and the metal plate (cooling plate) 13 can be easily peeled off from the battery housing 15; therefore, the metal plate (cooling plate) 13 and the battery housing 15 are fractionated from each other, and recycling is facilitated.

The thickness of the adhesive sheet according to the present invention is preferably in a range of 0.05 mm or more and 2 mm or less. When the thickness of the adhesive sheet is 0.05 mm or more, the adhesive strength between the battery housing and the metal plate (cooling plate) becomes sufficient. When the thickness is 2 mm or less, peeling at the time of disassembly is facilitated, and good thermal conductivity can be achieved. From the above-described viewpoint, the thickness of the adhesive sheet is more preferably in a range of 0.1 mm or more and 1 mm or less.

The adhesive sheet according to the present invention is formed by molding a material containing an easy-to-dismantle adhesive material described later into a sheet shape.

(Easy-to-Dismantle Adhesive Material)

The adhesive sheet according to the present invention contains an easy-to-dismantle adhesive material. The easy-to-dismantle adhesive material may be selected from various materials, and is not particularly limited as long as the effect of the present invention is achieved.

In the present invention, the adhesive sheet containing the easy-to-dismantle adhesive material is not limited as long as it has sufficient adhesiveness when used as a battery and its adhesive strength is reduced by an external stimulus applied at any timing. In the present invention, the external stimulus is preferably heating because it is easy to handle.

Examples of the easy-to-dismantle adhesive material include a reactive polymer such as a decomposable polymer, and a material that reduces the adhesive strength when the interface interaction of an adherend is reduced or the elastic modulus is changed, and preferably include a material in which the adhesive strength is reduced by heating.

In the present invention, a thermoplastic resin having adhesiveness imparted through modification is suitably used, and it is particularly preferable to contain a modified polyolefin-based resin. That is, the easy-to-dismantle adhesive material preferably contains a modified polyolefin-based resin.

(Thermoplastic Resin to Which Adhesiveness is Imparted through Modification)

As described above, the easy-to-dismantle adhesive material included in the adhesive sheet preferably contains a thermoplastic resin to which adhesiveness is imparted through modification (hereinafter, it may be referred to as the adhesive thermoplastic resin). An unmodified thermoplastic resin is not particularly limited as long as the effects of the present invention are exhibited, and examples thereof include a polyolefin resin, a polycarbonate resin, a polyester resin, and a polyamide resin. Of these, from the viewpoint of recyclability, a polyolefin resin is preferable as the unmodified thermoplastic resin. That is, the thermoplastic resin to which adhesiveness is imparted through modification preferably contains a modified polyolefin-based resin, more preferably, it is a modified polyolefin-based resin.

(Modified Polyolefin-Based Resin)

The modified polyolefin-based resin is a resin in which at least one of a main chain terminal and a side chain of an unmodified polyolefin-based resin is modified. The modification position is not particularly limited.

Specific examples of the unmodified polyolefin-based resin include ethylene homopolymers such as low-density polyethylene (LDPE) and high-density polyethylene (HDPE), ethylene-$\alpha$-olefin copolymers such as ethylene-propylene copolymer, ethylene-butene copolymer, ethylene-hexene copolymer, ethylene-octene copolymer, ethylene-propylene-butene copolymer, ethylene-propylene-hexene copolymer, ethylene-propylene-octene copolymer, ethylene-butene-hexene copolymer, ethylene-butene-octene copolymer, and ethylene-hexene-octene copolymer, ethylene-based copolymers such as ethylene-vinyl acetate copolymer, ethylene-(meth)acrylic acid copolymer, ethylene-(meth)methyl acrylate copolymer, ethylene-(meth)ethyl acrylate copolymer, and ethylene-(meth) acrylic acid-(meth)methyl acrylate copolymer, propylene-based copolymers such as propylene homopolymer, propylene-ethylene random copolymer, propylene-butene random copolymer, propylene-ethylene-hexene random copolymer, propylene-ethylene-octene random copolymer, propylene-butene-hexene random copolymer, propylene-butene-octene random copolymer, propylene-hexene-octene random copolymer, and propylene-ethylene block copolymer, butene homopolymer, and butene-based copolymers. Hereinafter, the polymer and the copolymer may be collectively referred to as "(co)polymer". The term "(meth)acrylic acid" means acrylic acid and/or methacrylic acid. The same applies hereinafter.

The ethylene-based copolymer, the propylene-based copolymer, and the butene-based copolymer described above mean copolymers containing ethylene, propylene, or butene in a proportion of 50 mol% or more of all the monomer units constituting the copolymer, respectively.

For these raw material polyolefin-based resins, only one type may be used alone, or two or more types may be used in any combination and proportions.

Of these, from the viewpoint of recyclability, propylene-based copolymers such as a propylene homopolymer, a propylene-ethylene random copolymer, a propylene-butene random copolymer, a propylene-ethylene-hexene random copolymer, a propylene-ethylene-octene random copolymer, a propylene-butene-hexene random copolymer, a propylene-butene-octene random copolymer, a propylene-hexene-octene random copolymer, and a propylene-ethylene block copolymer are preferable.

The density (JIS K7112-1) of the raw material polyolefin-based resin is not particularly limited, but is preferably 0.85 g/cm$^3$ or more, more preferably 0.87 g/cm$^3$ or more, and on the other hand, it is preferably 0.98 g/cm$^3$ or less, more preferably 0.97 g/cm$^3$ or less.

The melt flow rate (MFR) of the raw material polyolefin-based resin is not particularly limited, but is preferably 0.01 g/10 min or more and 50 g/10 min or less, more preferably 0.1 g/10 min or more and 30 g/10 min or less, from the viewpoint of moldability. Here, the MFR of the polyolefin-based resin means a value at 190°C and a load of 2.16 kg when the polyolefin-based resin is an ethylene-based (co)polymer or a butene-based (co)polymer, and means a value at 230°C and a load of 2.16 kg when the polyolefin-based resin is a propylene-based (co)polymer.

The modified polyolefin-based resin contained in the easy-to-dismantle adhesive material of the present invention is produced by introducing a modifying group into the unmodified polyolefin-based resin. The modifying group is not particularly limited, and is preferably at least one functional group selected from the group consisting of an acid anhydride group, a carboxy group, an amino group, an imino group, an alkoxysilyl group, a silanol group, a silyl ether group, a hydroxy group, and an epoxy group.

Of these, a polyolefin-based resin modified with at least one selected from the group consisting of an unsaturated carboxylic acid, a derivative thereof, and an unsaturated silane is preferable, and a polyolefin-based resin graft-modified with an unsaturated carboxylic acid and/or a derivative thereof is more preferable. The term "graft modification" means that an unsaturated carboxylic acid and/or a derivative thereof is caused to bind to a polyolefin-based resin.

As described above, at which position the unmodified polyolefin-based resin is modified is not particularly limited as long as at least one of a main chain terminal and a side chain of the polyolefin-based resin is modified.

Examples of the unsaturated carboxylic acid used for graft-modifying the unmodified polyolefin-based resin include acrylic acid, methacrylic acid, maleic acid, fumaric acid, and itaconic acid. These may be used alone or in combination. Examples of the unsaturated carboxylic acid derivative include acid anhydrides, esters, amides, imides, and metal salts. These may be used alone or in combination.

Specific examples of the derivative of the unsaturated carboxylic acid include maleic anhydride, nadic anhydride, itaconic anhydride, citraconic anhydride, methyl acrylate, methyl methacrylate, ethyl acrylate, ethyl methacrylate, glycidyl acrylate, maleic acid monoethyl ester, maleic acid diethyl ester, itaconic acid monomethyl ester, itaconic acid diethyl ester, acrylamide, methacrylamide, maleic acid monoamide, maleic acid diamide, maleic acid-N-monoethylamide, maleic acid-N,N-diethylamide, maleic acid-N,N-monobutylamide, maleic acid-N,N-dibutylamide, fumaric acid monoamide, fumaric acid diamide, fumaric acid-N-monobutylamide, fumaric acid-N,N-dibutylamide, maleimide, N-butylmaleimide, N-phenylmaleimide, sodium acrylate, sodium methacrylate, potassium acrylate, and potassium methacrylate.

For the unsaturated carboxylic acids and/or derivatives thereof, one type may be used alone, or two or more types may be used in any combination and proportions.

Of these, maleic acid or an anhydride thereof is particularly preferable because of its low electron density and high reactivity.

The density of the modified polyolefin-based resin is not particularly limited, but the density measured by JIS K7112-1 is preferably 0.85 g/cm$^3$ or more, more preferably 0.87 g/cm$^3$ or more, and on the other hand, it is preferably 0.98 g/cm$^3$ or less, more preferably 0.97 g/cm$^3$ or less.

The melt flow rate (MFR) of the modified polyolefin-based resin is not particularly limited, but is preferably 0.01 g/10 min or more and 1000 g/10 min or less, more preferably 0.1 g/10 min or more and 500 g/10 min or less. The MFR of the modified polyolefin-based resin means a value at 190°C and a load of 2.16 kg when the raw material polyolefin-based resin is an ethylene-based (co)polymer or a butene-based (co)polymer. When the raw material polyolefin-based resin is a propylene-based (co)polymer, the value at 230°C, a load of 2.16 kg, and 2 mm orifice may be used, but when the molecular weight of the modified polyolefin-based resin is low and measurement is difficult, measurement may be performed under the conditions of 180°C, a load of 2.16 kg, and 1 mm orifice.

The melting point of the modified polyolefin-based resin is preferably 170°C or less, more preferably 165°C or less, still more preferably 160°C or less. When the melting point of the modified polyolefin-based resin is 170°C or less, the thermally expandable flame retardant and the thermally expandable foaming agent described later expand or the foaming agent (excluding thermally expandable foaming agent) described later foams in a state where the resin is melted, and thus, more excellent dismantling properties can be provided. The melting point of the modified polyolefin-based resin can be measured with a differential scanning calorimeter in accordance with JIS K 7121.

Hereinafter, a method for producing a graft-modified polyolefin-based resin among modified polyolefin-based resins will be described.

The graft modification of the raw material polyolefin-based resin (unmodified polyolefin-based resin) can be performed by various known methods. Examples of the modification method include, but are not particularly limited to, a melt modification method in which an unsaturated carboxylic acid and/or a derivative thereof is added to a melted raw material polyolefin-based resin for graft copolymerization and a solution modification method in which an unsaturated carboxylic acid and/or a derivative thereof is added to a raw material polyolefin-based resin dissolved in a solvent for graft copolymerization.

Of these, from the viewpoint of hygiene, a melt modification method in which a solvent is not used is preferable, and graft modification using an extruder is more preferable. For efficient graft modification, it is preferable to perform the modification in the presence of a radical initiator.

The radical initiator is not particularly limited, but an organic peroxide or an azo compound is preferable, and an organic peroxide is particularly preferable. Specific examples include dialkyl peroxides such as di-t-butyl peroxide, t-butylcumyl peroxide, dicumyl peroxide, 2,5-dimethyl-2,5-di(t-butylperoxy)hexane, 2,5-dimethyl-2,5-di(t-butylperoxy)hexine-3,1,4-bis(t-butylperoxyisopropyl)benzene, 1,1-bis(t-butylperoxy)cyclohexane, n-butyl-4,4-bis(t-butylperoxy)valerate, 2,2-bis(4,4-t-butylperoxycyclohexyl) propane, 2,2-bis(t-butylperoxy)butane, and 1,1-bis(t-butylperoxy) cyclododecane; peroxyesters such as t-butylperoxyacetate, t-butylperoxy-2-ethylhexanoate, t-butylperoxypivalate, t-butylperoxylaurate, t-butylperoxybenzoate, t-butylperoxyisopropyl carbonate, t-butylperoxymaleic acid, di-t-butylperoxyisophthalate, 2,5-dimethyl-2,5-di(benzoylperoxy)hexane, and 2,5-dimethyl-2,5-di(benzoylperoxy)hexyne-3, 2,5-dimethyl-2,5-di(tolylperoxy)hexane; diacyl peroxides such as di-3,5,5-trimethylhexanoyl peroxide, octanoyl peroxide, and dibenzoyl peroxide; hydroperoxides such as t-butyl hydroperoxide, cumene hydroperoxide, diisopropylbenzene hydroperoxide, p-menthane hydroperoxide, and 2,5-dimethyl-2,5-di(hydroperoxy)hexane; and ketone peroxides such as methyl ethyl ketone peroxide and cyclohexanone peroxide, but are not particularly limited thereto.

Of these, a radical initiator having a decomposition temperature at which the half-life is 1 minute of 100°C or more is preferable from the viewpoint of graft modification efficiency. Specifically, dialkyl peroxides such as di-t-butyl peroxide, dicumyl peroxide, 2,5-dimethyl-2,5-di(t-butylperoxy)hexane, and 2,5-dimethyl-2,5-di(t-butylperoxy)hexyne-3, and peroxyesters such as t-butyl peroxybenzoate, 2,5-dimethyl-2,5-di(benzoylperoxy)hexane, and 2,5-dimethyl-2,5-di(benzoylperoxy)hexyne-3 are preferable.

Only one type of radical initiator may be used alone, or two or more types thereof may be used in any combination and proportions. The amount of the radical initiator used is not particularly limited, but is preferably 0.001 parts by mass or more and 5 parts by mass or less with respect to 100 parts by mass of the raw material polyolefin-based resin.

The content (hereinafter, sometimes referred to as a graft ratio) of the unsaturated carboxylic acid and/or the derivative thereof in the modified polyolefin-based resin is preferably 0.01 mass% or more, more preferably 0.1 mass% or more, and on the other hand, it is preferably 20 mass% or less, more preferably 10 mass% or less, still more preferably 5 mass% or less, with respect to the total amount of the modified polyolefin-based resin, although it is different depending on the type of the raw material polyolefin-based resin and the unsaturated carboxylic acid and/or the derivative thereof used for modification, and not particularly limited.

When the graft ratio is equal to or more than the lower limit of the preferable value, the adhesiveness of the easy-to-dismantle adhesive material is improved, and on the other hand, when the graft ratio is equal to or less than the upper limit of the preferable value, the raw material polyolefin-based resin itself is prevented from partially crosslinking during grafting to deteriorate moldability, or the product appearance is prevented from deteriorating due to fish eyes, generation of foreign matters, or the like.

The graft ratio can be determined from absorption peculiar to the carboxylic acid and/or the derivative thereof in the resin using an infrared absorption spectrum method with a test sample prepared by press-molding a modified polyolefin-based resin into a sheet having a thickness of 100 $\mu$m. Specifically, it can be determined by measuring the carbonyl characteristic absorption at from 1900 to 1600 cm$^{-1}$ (C=O stretching vibration band).

In the graft modification of the raw material polyolefin-based resin, an unsaturated carboxylic acid unreacted with the raw material polyolefin-based resin and/or a derivative thereof may also remain, but as described above, the graft ratio in the present specification means a value when the modified polyolefin-based resin is measured by the above method.

As the modified polyolefin-based resin suitable for the present invention, a commercially available product can also be used. For example, those corresponding to the above characteristics can be appropriately selected and used from "Modic (trade name)" series manufactured by Mitsubishi Chemical Corporation.

The proportion of the adhesive thermoplastic resin to the total mass of the easy-to-dismantle adhesive material is preferably 1 mass% or more, more preferably 2 mass% or more, still more preferably 3 mass% or more, and on the other hand, it is preferably 95 mass% or less, more preferably 93 mass% or less, still more preferably 90 mass% or less. When the proportion of the adhesive thermoplastic resin is equal to or more than the lower limit, the adhesiveness and the thermal conductivity are excellent, and when the proportion is equal to or less than the upper limit, the content of the thermally expandable flame retardant and the thermally expandable foaming agent described later in the easy-to-dismantle adhesive material can be secured.

The proportion of the adhesive thermoplastic resin to the total mass of the easy-to-dismantle adhesive material may be, for example, 1 mass% or more and 95 mass% or less, 2 mass% or more and 93 mass% or less, or 3 mass% or more and 90 mass% or less.

(Thermally Expandable Material)

The easy-to-dismantle adhesive material included in the adhesive sheet according to the present invention preferably contains a thermally expandable material. Examples of the thermally expandable material include a thermally expandable flame retardant and a thermally expandable foaming agent described later, and the thermally expandable material preferably includes a thermally expandable flame retardant and/or a thermally expandable foaming agent. That is, the easy-to-dismantle adhesive material preferably contains a thermally expandable flame retardant and/or a thermally expandable foaming agent.

(Thermally Expandable Flame Retardant)

The easy-to-dismantle adhesive material included in the adhesive sheet according to the present invention preferably contains a thermally expandable flame retardant. The inclusion of the thermally expandable flame retardant exhibits flame retardancy and flame shielding properties and can prevent fire spreading even when the battery cell undergoes a runaway reaction and burns.

The thermally expandable flame retardant is not particularly limited as long as it is a flame retardant having a property of expanding when heated, and for example, there is a flame retardant in which flame retardancy is imparted by forming a carbonized film during combustion, and the film expands to form an intumescent layer. From the viewpoint of improving the flame shielding properties, it is preferable to contain a phosphorus-based flame retardant as the thermally expandable flame retardant. In the classification focusing on the action mechanism of the flame retardant, it is preferable that the thermally expandable flame retardant contain an intumescent flame retardant from the viewpoint of improving the flame shielding properties. From the viewpoint of environmental properties, a non-halogen-based flame retardant is preferable.

Since the easy-to-dismantle adhesive material contains the thermally expandable flame retardant, the adhesive sheet formed by molding the easy-to-dismantle adhesive material is expanded by heating, and the adhesiveness between the resin battery housing and the metal plate (cooling plate) is lowered to facilitate peeling.

The phosphorus-based flame retardant is a phosphorus compound, that is, a compound containing a phosphorus atom in the molecule. The phosphorus-based flame retardant exhibits a flame retardant effect by forming a char (carbonized film) during the combustion of the adhesive sheet containing the easy-to-dismantle adhesive material.

The phosphorus-based flame retardant may be a known phosphorus-based flame retardant, such as a (poly) phosphate salt or a (poly)phosphate ester. As used herein, "(poly)phosphate salt" refers to a phosphate salt or a polyphosphate salt, and "(poly)phosphate ester" refers to a phosphate ester or a polyphosphate ester.

The phosphorus-based flame retardant is preferably in the form of solid at 80°C.

From the viewpoint of flame retardancy, the phosphorus-based flame retardant is preferably a (poly)phosphate salt.

Examples of the (poly)phosphate salt include ammonium polyphosphate salt, melamine polyphosphate salt, piperazine polyphosphate salt, piperazine orthophosphate salt, melamine pyrophosphate salt, piperazine pyrophosphate salt, melamine orthophosphate salt, calcium phosphate, and magnesium phosphate.

Similarly, a compound in which melamine or piperazine of the above-exemplified compound is replaced with an alternative nitrogen compound can be used. Examples of the alternative nitrogen compound include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-tetraethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, trans-2,5-dimethylpiperazine, 1,4-bis(2-aminoethyl)piperazine, 1,4-bis(3-aminopropyl)piperazine, acetoguanamine, benzoguanamine, acrylguanamine, 2,4-diamino-6-nonyl-1,3,5- triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, 2-amino-4,6-dimercapto-1,3,5-triazine, ammeline, benzoguanamine, acetoguanamine, phthalodiguanamine, melamine cyanurate, butylenediguanamine, norbornenediguanamine, methylenediguanamine, ethylenedimelamine, trimethylenedimelamine, tetramethylenedimelamine, hexamethylenedimelamine, and 1,3-hexylenedimelamine. For these (poly)phosphate salts, one type may be used alone, or two or more types may be used in combination.

Among the above, the thermally expandable flame retardant is preferably a salt of (poly)phosphoric acid and a nitrogen compound, which is a flame retardant called an intumescent flame retardant. The intumescent flame retardant is a flame retardant that suppresses the combustion of a material by forming a surface intumescent layer (intumescent) that prevents radiant heat from a combustion source and diffusion of a combustion gas or smoke from a burning material to the outside. When the surface intumescent layer is formed, diffusion of a decomposition product and heat transfer are suppressed, and excellent flame retardancy is exhibited.

Examples of the nitrogen compound in the intumescent flame retardant include ammonia, melamine, piperazine, and the alternative nitrogen compounds described above. Specific examples of the nitrogen compound include ammonium salts and amine salts of (poly)phosphoric acid, such as ammonium polyphosphate, melamine polyphosphate, piperazine polyphosphate, ammonium pyrophosphate, melamine pyrophosphate, and piperazine pyrophosphate. Zinc oxide may also be contained as a flame retardant aid. This case is preferred because the flame-retardant performance is further improved.

The thermally expandable flame retardant preferably contains a compound having a melamine structure or a piperazine structure. The thermally expandable flame retardant may be, for example, a mixture containing a compound having a melamine structure and a compound having a piperazine structure.

Examples of commercially available products of the thermally expandable flame retardant include ADK STAB FP-2100J, FP-2200, and FP-2500S (manufactured by ADEKA CORPORATION).

One type of the thermally expandable flame retardant can be used alone, or two or more types thereof can be used in combination.

In the easy-to-dismantle adhesive material, the proportion of the thermally expandable flame retardant is preferably 10 parts by mass or more and 100 parts by mass or less with respect to 100 parts by mass of the total mass of the adhesive thermoplastic resin of the easy-to-dismantle adhesive material and the polyethylene-based resin and/or the polypropylene-based resin that can be contained as necessary.

When the proportion of the thermally expandable flame retardant to the total mass of the adhesive thermoplastic resin and the polyethylene-based resin and/or polypropylene-based resin that can be contained as necessary is within the above range, it is possible to prevent a significant decrease in the mechanical properties of the adhesive sheet and to achieve high flame retardancy when used in combination with the dispersant described later.

The total mass of the adhesive thermoplastic resin of the easy-to-dismantle adhesive material and the polyethylene-based resin and/or the polypropylene-based resin that can be contained as necessary means: the content of the adhesive thermoplastic resin when the easy-to-dismantle adhesive material does not contain a polyethylene-based resin or a polypropylene-based resin; the total mass of the adhesive thermoplastic resin + contained polyethylene-based resin or polypropylene-based resin when the easy-to-dismantle adhesive material contains either the polyethylene-based resin or the polypropylene-based resin; and the total mass of the adhesive thermoplastic resin + polyethylene-based resin + polypropylene-based resin when the easy-to-dismantle adhesive material contains the polyethylene-based resin and the polypropylene-based resin (the same applies hereinafter).

Here, the polyethylene-based resin and the polypropylene-based resin are unmodified resins, that is, unmodified polyethylene-based resins, and unmodified polypropylene-based resins, and they do not correspond to adhesive thermoplastic resins.

In particular, the proportion of the thermally expandable flame retardant to 100 parts by mass of the total mass of the adhesive thermoplastic resin and the polyethylene-based resin and/or polypropylene-based resin that can be contained as necessary is preferably 20 parts by mass or more, more preferably 40 parts by mass or more, still more preferably 45 parts by mass or more, yet still more preferably 55 parts by mass or more, and on the other hand, it is preferably 90 parts by mass or less, more preferably 80 parts by mass or less, still more preferably 75 parts by mass or less, yet still more preferably 70 parts by mass or less.

The proportion of the thermally expandable flame retardant to 100 parts by mass of the total mass of the adhesive thermoplastic resin and the polyethylene-based resin and/or polypropylene-based resin that can be contained as necessary may be, for example, 20 parts by mass or more and 90 parts by mass or less, 40 parts by mass or more and 80 parts by mass or less, 45 parts by mass or more and 75 parts by mass or less, or 55 parts by mass or more and 70 parts by mass or less.

The proportion of the thermally expandable flame retardant to the total mass of the easy-to-dismantle adhesive material is preferably 15 mass% or more, more preferably 25 mass% or more, still more preferably 35 mass% or more, and on the other hand, it is preferably 70 mass% or less, more preferably 60 mass% or less, still more preferably 50 mass% or less. When the proportion of the thermally expandable flame retardant is equal to or more than the lower limit, the flame retardancy is more excellent, and the dismantling properties can be improved. When the proportion is equal to or less than the upper limit, the intrinsic properties of the adhesive thermoplastic resin contained in the easy-to-dismantle adhesive material and the polyethylene-based resin and/or the polypropylene-based resin that can be contained as necessary are easily exhibited.

The proportion of the thermally expandable flame retardant to the total mass of the easy-to-dismantle adhesive material may be, for example, 15 mass% or more and 70 mass% or less, 25 mass% or more and 60 mass% or less, or 35 mass% or more and 50 mass% or less.

(Thermally Expandable Foaming Agent)

The easy-to-dismantle adhesive material included in the adhesive sheet according to the present invention preferably contains a thermally expandable foaming agent.

The thermally expandable foaming agent is not particularly limited as long as it is a foaming agent having a property of expanding when heated. For example, there is a thermally expandable foaming agent including a chemical foaming agent and/or a physical foaming agent, and a thermoplastic resin capsule enclosing the chemical foaming agent and/or the physical foaming agent, which can be suitably used. A thermally expandable foaming agent containing a chemical foaming agent and/or a physical foaming agent and a thermoplastic resin capsule enclosing the chemical foaming agent and/or the physical foaming agent is a foaming agent in which the outer shell resin is softened when heated and the pressure of the foaming agent present inside is increased to rapidly expand the volume because the foaming agent is enclosed in the thermoplastic resin.

Since the easy-to-dismantle adhesive material contains the thermally expandable foaming agent, the adhesive sheet formed by molding the easy-to-dismantle adhesive material is expanded by heating, and the adhesiveness between the resin battery housing and the metal plate (cooling plate) is lowered to facilitate peeling.

Examples of the chemical foaming agent include azodicarbonamide (ADCA), N,N'-dinitrosopentamethylenetetramine (DPT), and 4,4'-oxybisbenzenesulfonylhydrazide (OBSH).

Examples of the physical foaming agent include a hydrocarbon compound having a relatively low boiling point.

Of these, the thermally expandable foaming agent preferably contains a physical foaming agent and a thermoplastic resin capsule enclosing the physical foaming agent, more preferably contains a physical foaming agent containing a hydrocarbon compound and a thermoplastic resin capsule enclosing them.

As the thermally expandable foaming agent, a commercially available product can be employed. Examples of such a product include "Matsumoto Microsphere" (available from Matsumoto Yushi-Seiyaku Co., Ltd.), "EXPANCEL" (available from Japan Fillite Co., Ltd.), "Advancell EM series" (available from SEKISUI CHEMICAL CO., LTD.), and "Microsphere" (available from KUREHA CORPORATION).

In the easy-to-dismantle adhesive material, the proportion of the thermally expandable foaming agent is preferably 1 part by mass or more and 20 parts by mass or less with respect to 100 parts by mass of the total mass of the adhesive thermoplastic resin of the easy-to-dismantle adhesive material and the polyethylene-based resin and/or the polypropylene-based resin that can be contained as necessary.

When the proportion of the thermally expandable foaming agent to the total mass of the adhesive thermoplastic resin and the polyethylene-based resin and/or the polypropylene-based resin that can be contained as necessary is within the above-described range, the intrinsic physical properties of the adhesive thermoplastic resin contained in the easy-to-dismantle adhesive material and the polyethylene-based resin and/or the polypropylene-based resin that can be contained as necessary are likely to be exhibited while maintaining the dismantling properties.

In particular, the proportion of the thermally expandable foaming agent to 100 parts by mass of the total mass of the adhesive thermoplastic resin and the polyethylene-based resin and/or polypropylene-based resin that can be contained as necessary is preferably 1 part by mass or more, more preferably 3 parts by mass or more, still more preferably 5 parts by mass or more, and on the other hand, it is preferably 20 parts by mass or less, more preferably 15 parts by mass or less, still more preferably 10 parts by mass or less.

The proportion of the thermally expandable foaming agent to 100 parts by mass of the total mass of the adhesive thermoplastic resin and the polyethylene-based resin and/or polypropylene-based resin that can be contained as necessary may be, for example, 1 part by mass or more and 20 parts by mass or less, 3 parts by mass or more and 15 parts by mass or less, or 5 parts by mass or more and 10 parts by mass or less.

The proportion of the thermally expandable foaming agent to the total mass of the easy-to-dismantle adhesive material is preferably 1 mass% or more, more preferably 3 mass% or more, still more preferably 4 mass% or more, and on the other hand, it is preferably 20 mass% or less, more preferably 15 mass% or less, still more preferably 10 mass% or less, particularly preferably 7 mass% or less. When the proportion of the thermally expandable foaming agent is equal to or more than the lower limit, the dismantling properties can be improved, and when the proportion is equal to or less than the upper limit, the intrinsic physical properties of the adhesive thermoplastic resin contained in the easy-to-dismantle adhesive material and the polyethylene-based resin and/or the polypropylene-based resin that can be contained as necessary are easily exhibited.

The proportion of the thermally expandable foaming agent to the total mass of the easy-to-dismantle adhesive material may be, for example, 1 mass% or more and 20 mass% or less, 3 mass% or more and 15 mass% or less, 3 mass% or more and 10 mass% or less, or 4 mass% or more and 7 mass% or less.

(Dispersant)

The easy-to-dismantle adhesive material included in the adhesive sheet according to the present invention preferably contains a dispersant. The dispersant is not particularly limited as long as the thermally expandable flame retardant and the thermally expandable foaming agent can be dispersed in the adhesive thermoplastic resin and the polyethylene-based resin and/or the polypropylene-based resin that can be contained as necessary, but a polymer dispersant can be suitably used from the viewpoint of compatibility with the adhesive thermoplastic resin and the polyethylene-based resin and/or the polypropylene-based resin that can be contained as necessary.

The polymer dispersant is preferably a polymer dispersant having a functional group, and is preferably a polymer dispersant having a functional group such as a carboxy group, a phosphate group, a sulfonate group, a primary, secondary, or tertiary amino group, a quaternary ammonium salt group, or a group derived from a nitrogen-containing heterocyclic compound such as pyridine, pyrimidine, or pyrazine, from the viewpoint of dispersion stability.

In the present embodiment, a polymer dispersant having a carboxy group is preferable, and a copolymer of an $\alpha$-olefin and an unsaturated carboxylic acid is more preferable. By using the dispersant, the dispersibility of the thermally expandable flame retardant and the thermally expandable foaming agent can be improved, and the contents of the thermally expandable flame retardant and the thermally expandable foaming agent can be reduced.

The polymer dispersant having a functional group excludes a modified polyolefin-based resin used as the easy-to-dismantle adhesive material.

In the present embodiment, the proportion of the α-olefin unit is preferably 20 mol% or more and 80 mol% or less per 100 mol% of the total of the α-olefin unit and the unsaturated carboxylic acid unit in the "copolymer of an α-olefin and an unsaturated carboxylic acid" described above (hereinafter, it may be simply referred to as "copolymer").

In the copolymer, the proportion of the α-olefin unit with respect to the total amount of the α-olefin unit and the unsaturated carboxylic acid unit is more preferably 30 mol% or more, and is more preferably 70 mol% or less. When the proportion of the α-olefin is equal to or more than the lower limit, compatibility with the adhesive thermoplastic resin and the polyethylene-based resin and/or the polypropylene-based resin that can be contained as necessary is more excellent, and when the proportion is equal to or less than the upper limit, compatibility with the thermally expandable flame retardant and the thermally expandable foaming agent is more excellent.

In the copolymer, the α-olefin is preferably an α-olefin having 10 or more and 80 or less carbon atoms. When the number of carbon atoms of the α-olefin is 10 or more, compatibility with the adhesive thermoplastic resin and the polyethylene-based resin and/or polypropylene-based resin that can be contained as necessary tends to improve, and when the number of carbon atoms is 80 or less, it is advantageous in terms of raw material cost. From the viewpoints described above, the number of carbons of the α-olefin is more preferably 12 or more and 70 or less, more preferably 15 or more and 65 or less, and particularly preferably 18 or more and 60 or less.

In the copolymer, examples of the unsaturated carboxylic acid include (meth)acrylic acid, maleic acid, methylmaleic acid, fumaric acid, methylfumaric acid, tetrahydrophthalic acid, itaconic acid, citraconic acid, crotonic acid, isocrotonic acid, glutaconic acid, norbornene-5-ene-2,3-dicarboxylic acid, and an ester, anhydride, or imide of such unsaturated carboxylic acids. The term "(meth)acrylic acid" indicates acrylic acid or methacrylic acid.

Specific examples of the ester, anhydride, or imide of the unsaturated carboxylic acid include (meth)acrylic esters such as methyl (meth)acrylate, ethyl (meth)acrylate, butyl (meth)acrylate, 2-ethylhexyl (meth)acrylate, and glycidyl (meth)acrylate; dicarboxylic anhydrides such as maleic anhydride, itaconic anhydride, citraconic anhydride, and 5-norbornene-2,3-dicarboxylic anhydride; and maleimide compounds such as maleimide, N-ethylmaleimide, and N-phenylmaleimide. For these, one type may be used alone, or two or more types may be used in combination.

Among the compounds described above, esters and dicarboxylic anhydrides are preferred from the viewpoint of copolymerization reactivity. Of these, from the viewpoint of compatibility with the thermally expandable flame retardant and the thermally expandable foaming agent, a dicarboxylic anhydride is preferable, and maleic anhydride is particularly preferable.

The weight average molecular weight of the copolymer is preferably 2000 or more, more preferably 3000 or more, still more preferably 5000 or more, and on the other hand, it is preferably 50000 or less, more preferably 30000 or less, still more preferably 10000 or less. When the weight average molecular weight of the copolymer is within the above-described range, the dispersibility of the thermally expandable flame retardant and the thermally expandable foaming agent becomes more excellent.

The weight average molecular weight of the copolymer is a value calibrated with standard polystyrene as measured by dissolving the copolymer in tetrahydrofuran (THF) and subjecting the solution to gel permeation chromatography.

Examples of commercially available products of the copolymer include Licolub CE2 (manufactured by Clariant Japan) and DIACARNA 30M (manufactured by Mitsubishi Chemical Corporation).

When the easy-to-dismantle adhesive material contains a thermally expandable flame retardant, the proportion of the dispersant to the thermally expandable flame retardant (100 mass%) in the easy-to-dismantle adhesive material is preferably 10 mass% or less.

In particular, the proportion of the dispersant to the thermally expandable flame retardant (100 mass%) is preferably 0.01 mass% or more, more preferably 0.05 mass% or more, still more preferably 0.1 mass% or more, even more preferably 0.5 mass% or more, further more preferably 1 mass% or more, particularly preferably 3 mass% or more, and on the other hand, it is more preferably 8 mass% or less, still more preferably 7 mass% or less, even more preferably 6 mass% or less, particularly preferably 5 mass% or less.

When the proportion of the dispersant to the thermally expandable flame retardant (100 mass%) is within the above-described range, it is possible to produce an adhesive sheet having high flame retardancy and dismantling properties while maintaining high mechanical strength.

In the easy-to-dismantle adhesive material according to the present invention, the proportion of the dispersant to the thermally expandable flame retardant (100 mass%) may be, for example, 0.01 mass% or more and 8 mass% or less, 0.05 mass% or more and 8 mass% or less, 0.1 mass% or more and 7 mass% or less, 0.1 mass% or more and 6 mass% or less, 0.5 mass% or more and 6 mass% or less, 1 mass% or more and 6 mass% or less, or 3 mass% or more and 5 mass% or less.

When the easy-to-dismantle adhesive material contains a thermally expandable flame retardant, the proportion of the dispersant to the total mass of the easy-to-dismantle adhesive material is preferably 0.01 mass% or more, more preferably 0.1 mass% or more, still more preferably 1 mass% or more, and on the other hand, it is preferably 10 mass% or less, more preferably 5 mass% or less, still more preferably 3 mass% or less.

When the proportion of the dispersant is equal to or more than the lower limit, the thermally expandable flame retardant is well dispersed, and in addition to the flame retardancy of the easy-to-dismantle adhesive material, the dismantling properties and the appearance of the resulting adhesive sheet are improved. When the proportion of the dispersant is equal to or less than the upper limit, the influence of the dispersant on the flame retardancy of the easy-to-dismantle adhesive material can be suppressed.

The proportion of the dispersant to the total mass of the easy-to-dismantle adhesive material according to the present invention may be, for example, 0.01 mass% or more and 10 mass% or less, 0.1 mass% or more and 5 mass% or less, or 1 mass% or more and 3 mass% or less.

When the easy-to-dismantle adhesive material contains a thermally expandable flame retardant, the proportion of the dispersant to the total mass of the adhesive thermoplastic resin, the polyethylene-based resin and/or polypropylene-based resin that can be contained as necessary, and the thermally expandable flame retardant in the easy-to-dismantle adhesive material is preferably 0.01 mass% or more, more preferably 0.1 mass% or more, still more preferably 1 mass% or more, even more preferably 1.5 mass% or more, and on the other hand, it is preferably 5 mass% or less, more preferably 4 mass% or less, still more preferably 3 mass% or less.

When the proportion of the dispersant is equal to or more than the lower limit, the thermally expandable flame retardant is better dispersed, and in addition to the flame retardancy of the easy-to-dismantle adhesive material, the dismantling properties and the appearance of the resulting adhesive sheet are further improved. When the proportion of the dispersant is equal to or less than the upper limit, the influence of the dispersant on the flame retardancy of the easy-to-dismantle adhesive material can be further suppressed.

The proportion of the dispersant to the total mass of the adhesive thermoplastic resin, the polyethylene-based resin and/or the polypropylene-based resin that can be contained as necessary, and the thermally expandable flame retardant may be, for example, 0.01 mass% or more and 5 mass% or less, 0.1 mass% or more and 4 mass% or less, 1 mass% or more and 3 mass% or less, or 1.5 mass% or more and 3 mass% or less.

When the easy-to-dismantle adhesive material contains a thermally expandable foaming agent, the proportion of the dispersant to the thermally expandable foaming agent (100 mass%) in the easy-to-dismantle adhesive material is preferably 30 mass% or less.

In particular, the proportion of the dispersant to the thermally expandable foaming agent (100 mass%) is preferably 0.03 mass% or more, more preferably 0.3 mass% or more, still more preferably 0.5 mass% or more, yet still more preferably 1 mass% or more, yet still more preferably 2 mass% or more, particularly preferably 3 mass% or more, and on the other hand, it is more preferably 30 mass% or less, still more preferably 20 mass% or less, still more preferably 15 mass% or less, particularly preferably 10 mass% or less.

When the proportion of the dispersant to the thermally expandable foaming agent (100 mass%) is within the above-described range, it is possible to produce an adhesive sheet having dismantling properties while maintaining high mechanical strength.

In the easy-to-dismantle adhesive material according to the present invention, the proportion of the dispersant to the thermally expandable foaming agent (100 mass%) may be, for example, 0.03 mass% or more and 30 mass% or less, 0.3 mass% or more and 30 mass% or less, 0.5 mass% or more and 30 mass% or less, 1 mass% or more and 20 mass% or less, 2 mass% or more and 15 mass% or less, or 3 mass% or more and 10 mass% or less.

When the easy-to-dismantle adhesive material contains a thermally expandable foaming agent, the proportion of the dispersant to the total mass of the easy-to-dismantle adhesive material is preferably 0.1 mass% or more, more preferably 0.2 mass% or more, still more preferably 0.3 mass% or more, and on the other hand, it is preferably 3 mass% or less, more preferably 2 mass% or less, still more preferably 1 mass% or less.

When the proportion of the dispersant is equal to or more than the lower limit, the thermally expandable foaming agent is well dispersed, and the dismantling properties and the appearance of the resulting adhesive sheet are improved. When the proportion of the dispersant is equal to or less than the upper limit, the influence of the dispersant on the adhesive performance of the easy-to-dismantle adhesive material can be further suppressed.

The proportion of the dispersant to the total mass of the easy-to-dismantle adhesive material according to the present invention may be, for example, 0.1 mass% or more and 3 mass% or less, 0.2 mass% or more and 2 mass% or less, or 0.3 mass% or more and 1 mass% or less.

When the easy-to-dismantle adhesive material contains a thermally expandable foaming agent, the proportion of the dispersant to the total mass of the adhesive thermoplastic resin, the polyethylene-based resin and/or polypropylene-based resin that can be contained as necessary, and the thermally expandable foaming agent in the easy-to-dismantle adhesive material is preferably 0.05 mass% or more, more preferably 0.1 mass% or more, still more preferably 0.2 mass% or more, yet still more preferably 0.3 mass% or more, and on the other hand, it is preferably 3 mass% or less, more preferably 2 mass% or less, still more preferably 1 mass% or less.

When the proportion of the dispersant is equal to or more than the lower limit, the thermally expandable foaming agent is further well dispersed, and the dismantling properties and the appearance of the resulting adhesive sheet are further improved. When the proportion of the dispersant is equal to or less than the upper limit, the influence of the dispersant on the adhesive performance of the easy-to-dismantle adhesive material can be further suppressed.

The proportion of the dispersant to the total mass of the adhesive thermoplastic resin, the polyethylene-based resin and/or the polypropylene-based resin that can be contained as necessary, and the thermally expandable foaming agent may be, for example, 0.05 mass% or more and 5 mass% or less, 0.1 mass% or more and 3 mass% or less, 0.2 mass% or more and 2 mass% or less, or 0.3 mass% or more and 1 mass% or less.

The proportion of the total mass of the adhesive thermoplastic resin, the thermally expandable material, and the dispersant to the total mass of the easy-to-dismantle adhesive material is preferably 30 mass% or more, more preferably 35 mass% or more, still more preferably 40 mass% or more, particularly preferably 45 mass% or more, and it may be 100 mass%. For example, when the total mass of the adhesive thermoplastic resin, the thermally expandable material, and the dispersant is 100 mass%, the adhesive thermoplastic resin, the thermally expandable material (thermally expandable flame retardant or thermally expandable foaming agent), and the dispersant can be appropriately selected within the above-described possible amount range of these components such that the total of the three components is 100 mass%.

(Polyethylene-Based Resin)

The easy-to-dismantle adhesive material included in the adhesive sheet according to the present invention may further contain a polyethylene-based resin. The inclusion of a polyethylene-based resin bonds the polyethylene-based resin to an adherend at a lower temperature, and improves moldability when the easy-to-dismantle adhesive material according to the present invention is processed into a film or sheet shape. Here, the polyethylene-based resin is a resin that is not modified, that is, an unmodified polyethylene resin, and does not correspond to the adhesive thermoplastic resin such as a modified polyolefin-based resin. The above-described dispersant and the like using a polyolefin-based resin are also excluded.

The polyethylene-based resin is not particularly limited, and examples thereof include homopolymers of ethylene, copolymers of ethylene and other monomers. Examples of the other monomers include α-olefins having 3 or more and 20 or less carbon atoms such as propylene, 1-butene, 3-methyl-1-butene, 1-pentene, 4-methyl-1-pentene, 4,4-dimethyl-1-pentene, 1-hexene, 4-methyl-1-hexene, 1-heptene, 1-octene, 1-decene, and 1-octadecene, vinyl acetate, vinyl alcohol, (meth)acrylic acid, and (meth)acrylic acid esters. Here, (meth)acrylic acid means acrylic acid and/or methacrylic acid (the same applies hereinafter).

Specific examples of the polyethylene-based resin are the same as those listed as the specific examples of the unmodified polyolefin-based resin. Specific examples include ethylene homopolymers such as low-density polyethylene (LDPE) and high-density polyethylene (HDPE), ethylene-α-olefin copolymers such as ethylene-propylene copolymers, ethylene-butene copolymers, ethylene-hexene copolymers, ethylene-octene copolymers, ethylene-propylene-butene copolymers, ethylene-propylene-hexene copolymers, ethylene-propylene-octene copolymers, ethylene-butene-hexene copolymers, ethylene-butene-octene copolymers, and ethylene-hexene-octene copolymers, and ethylene-based (co)polymers such as ethylene-vinyl acetate copolymers, ethylene-(meth)acrylic acid copolymers, ethylene-methyl (meth)acrylate copolymers, ethylene-ethyl (meth)acrylate copolymers, and ethylene-(meth)acrylic acid-methyl(meth)acrylate copolymers. Here, "(co)polymer" is a generic term of a polymer and a copolymer (the same applies hereinafter).

Here, the ethylene-based copolymer means that ethylene is contained in the largest amount among all the monomer units constituting the copolymer, and is preferably a copolymer containing ethylene in a proportion of more than 50 mol%.

For these polyethylene-based resins, one type may be used alone, or two or more types may be used in any combination and proportions.

Of these, as the polyethylene-based resin, an ethylene homopolymer, an ethylene-α-olefin copolymer, and an ethylene-vinyl acetate copolymer, which are ethylene-based (co)polymers, are preferable because they are inexpensive, easily available, and excellent in economic efficiency. From the viewpoint of improving processability, low-density polyethylene and an ethylene-α-olefin copolymer are more preferable.

When the easy-to-dismantle adhesive material contains a polyethylene-based resin, the proportion of the polyethylene-based resin to the total mass of the easy-to-dismantle adhesive material is preferably 0.5 mass% or more, more preferably 1.0 mass% or more, still more preferably 1.5 mass% or more, and on the other hand, it is preferably 20 mass% or less, more preferably 10 mass% or less, still more preferably 5 mass% or less.

When the proportion of the polyethylene-based resin is equal to or more than the lower limit, the film moldability can be improved. In particular, neck-in is reduced. When the proportion of the polyethylene-based resin is equal to or less than the upper limit, heat resistance is maintained.

The proportion of the polyethylene-based resin to the total mass of the easy-to-dismantle adhesive material according to the present invention may be, for example, 0.5 mass% or more and 20 mass% or less, 1.0 mass% or more and 10 mass% or less, or 1.5 mass% or more and 5 mass% or less.

When the easy-to-dismantle adhesive material contains a polyethylene-based resin, the proportion of the total mass of the adhesive thermoplastic resin and the polyethylene-based resin to the total mass of the easy-to-dismantle adhesive material is preferably 2 mass% or more, more preferably 3 mass% or more, still more preferably 4 mass% or more, yet still more preferably 5 mass% or more, and on the other hand, it is preferably 98 mass% or less, more preferably 97 mass% or less, still more preferably 96 mass% or less, further preferably 95 mass% or less.

When the proportion of the total mass of the adhesive thermoplastic resin and the polyethylene-based resin is equal to or more than the lower limit, both of the adhesive strength before heating and the film moldability can be achieved. When the proportion of the total mass of the adhesive thermoplastic resin and the polyethylene-based resin is equal to or less than the upper limit, excellent adhesiveness to a resin battery case is achieved.

The proportion of the total mass of the adhesive thermoplastic resin and the polyethylene-based resin may be, for example, 2 mass% or more and 98 mass% or less, 3 mass% or more and 97 mass% or less, 4 mass% or more and 96 mass% or less, or 5 mass% or more and 95 mass% or less.

(Polypropylene-Based Resin)

The easy-to-dismantle adhesive material included in the adhesive sheet according to the present invention may further contain a polypropylene-based resin. By containing the polypropylene-based resin, excellent adhesiveness to a battery case formed of a resin, particularly formed of polypropylene is achieved. It also contributes to improvement in heat resistance and mechanical strength. The polypropylene-based resin is a resin that is not modified, that is, an unmodified polypropylene-based resin, and does not correspond to the adhesive thermoplastic resin such as a modified polyolefin-based resin. The above-described dispersant and the like using a polyolefin-based resin are also excluded.

The polypropylene-based resin is not particularly limited, and examples thereof include homopolymers of propylene, copolymers of propylene and other monomers. Examples of the other monomers include $\alpha$-olefins having 3 or more and 20 or less carbon atoms such as ethylene, 1-butene, 3-methyl-1-butene, 1-pentene, 4-methyl-1-pentene, 4,4-dimethyl-1-pentene, 1-hexene, 4-methyl-1-hexene, 1-heptene, 1-octene, 1-decene, and 1-octadecene.

Specific examples of the polypropylene-based resin are the same as those listed as the specific examples of the unmodified polyolefin-based resin. Specific examples thereof include propylene-based (co)polymers such as a propylene homopolymer, a propylene-ethylene random copolymer, a propylene-butene random copolymer, a propylene-ethylene-hexene random copolymer, a propylene-ethylene-octene random copolymer, a propylene-butene-hexene random copolymer, a propylene-butene-octene random copolymer, a propylene-hexene-octene random copolymer, and a propylene-ethylene block copolymer. Here, "(co)polymer" is a generic term of a polymer and a copolymer (the same applies hereinafter).

Here, the propylene-based copolymer means that propylene is contained in the largest amount among all the monomer units constituting the copolymer, and is preferably a copolymer containing propylene in a proportion of more than 50 mol%.

For these polypropylene-based resins, one type may be used alone, or two or more types may be used in any combination and proportions.

Of these, as the polypropylene-based resin, a propylene homopolymer, a propylene-ethylene random copolymer, and a propylene-ethylene-butene copolymer, which are propylene-based (co)polymers, are preferable because they are inexpensive, easily available, and excellent in economic efficiency. From the viewpoint of adhesiveness to the resin battery case and mechanical properties, a propylene homopolymer and a propylene-ethylene random copolymer are more preferable.

When the easy-to-dismantle adhesive material contains a polypropylene-based resin, the proportion of the polypropylene-based resin to the total mass of the easy-to-dismantle adhesive material is preferably 10 mass% or more, more preferably 20 mass% or more, still more preferably 30 mass% or more, and on the other hand, it is preferably 95 mass% or less, more preferably 90 mass% or less, still more preferably 85 mass% or less.

When the proportion of the polypropylene-based resin is equal to or more than the lower limit, excellent heat resistance, moldability, and adhesiveness to the resin battery case are achieved. When the proportion of the polypropylene-based resin is equal to or less than the upper limit, excellent peelability and adhesion to a metal plate are achieved.

The proportion of the polypropylene-based resin to the total mass of the easy-to-dismantle adhesive material according to the present invention may be, for example, 10 mass% or more and 95 mass% or less, 20 mass% or more and 90 mass% or less, or 30 mass% or more and 85 mass% or less.

When the easy-to-dismantle adhesive material contains a polypropylene-based resin, the proportion of the total mass of the adhesive thermoplastic resin and the polypropylene-based resin to the total mass of the easy-to-dismantle adhesive material is preferably 10 mass% or more, more preferably 20 mass% or more, still more preferably 30 mass% or more, even more preferably 40 mass% or more, and on the other hand, it is preferably 98 mass% or less, more preferably 97 mass% or less, still more preferably 96 mass% or less, even more preferably 95 mass% or less.

When the proportion of the total mass of the adhesive thermoplastic resin and the polypropylene-based resin is equal to or more than the lower limit, excellent adhesiveness to both the resin battery case and the metal plate is achieved. When the proportion of the total mass of the adhesive thermoplastic resin and the polypropylene-based resin is equal to or less than the upper limit, sufficient peelability is secured.

The proportion of the total mass of the adhesive thermoplastic resin and the polypropylene-based resin may be, for example, 10 mass% or more and 98 mass% or less, 20 mass% or more and 97 mass% or less, 30 mass% or more and 96 mass% or less, or 40 mass% or more and 95 mass% or less.

When the easy-to-dismantle adhesive material contains a polyethylene-based resin and a polypropylene-based resin, the proportion of the total mass of the adhesive thermoplastic resin, the polyethylene-based resin, and the polypropylene-based resin to the total mass of the easy-to-dismantle adhesive material is preferably 30 mass% or more, more preferably 35 mass% or more, still more preferably 40 mass% or more, even more preferably 45 mass% or more, and on the other hand, it is preferably 99 mass% or less, more preferably 98 mass% or less, still more preferably 97 mass% or less, even more preferably 96 mass% or less, particularly preferably 95 mass% or less.

When the proportion of the total mass of the adhesive thermoplastic resin, the polyethylene-based resin, and the polypropylene-based resin is equal to or more than the lower limit, both adhesiveness to the resin battery case and the metal plate and film moldability can be achieved. When the proportion of the total mass of the adhesive thermoplastic resin, the polyethylene-based resin, and the polypropylene-based resin is equal to or less than the upper limit, sufficient peelability is secured.

The proportion of the total mass of the adhesive thermoplastic resin, the polyethylene-based resin, and the polypropylene-based resin may be, for example, 30 mass% or more and 99 mass% or less, 35 mass% or more and 98 mass% or less, 40 mass% or more and 97 mass% or less, 45 mass% or more and 96 mass% or less, or 45 mass% or more and 95 mass% or less.

The proportion of the total mass of the adhesive thermoplastic resin, the thermally expandable material, the dispersant, and the polyethylene-based resin and/or the polypropylene-based resin that can be contained as necessary to the total mass of the easy-to-dismantle adhesive material is preferably 60 mass% or more, more preferably 70 mass% or more, still more preferably 80 mass% or more, particularly preferably 90 mass% or more, and it may be 100 mass%. For example, when the total mass of the adhesive thermoplastic resin, the thermally expandable material, the dispersant, the polyethylene-based resin, and/or the polypropylene-based resin is 100 mass%, the adhesive thermoplastic resin, the thermally expandable material (thermally expandable flame retardant or thermally expandable foaming agent), the dispersant, the polyethylene-based resin, and/or the polypropylene-based resin can be appropriately selected within the above-described range of amounts that can be taken by these components such that the total of these four or five components is 100 mass%.

(Preferred Aspect)

The easy-to-dismantle adhesive material included in the adhesive sheet according to the present invention preferably contains an adhesive thermoplastic resin and a thermally expandable material. **In** such a case, a modified polyolefin-based resin is preferably contained as the adhesive thermoplastic resin, and a thermally expandable flame retardant and/or a thermally expandable foaming agent is preferably contained as the thermally expandable material. That is, the easy-to-dismantle adhesive material according to the present invention preferably contains a modified polyolefin-based resin, and a thermally expandable flame retardant and/or a thermally expandable foaming agent.

The easy-to-dismantle adhesive material included in the adhesive sheet according to the present invention preferably contains a dispersant in addition to the adhesive thermoplastic resin and the thermally expandable material. In such a case, a copolymer of an $\alpha$-olefin and an unsaturated carboxylic acid is preferably contained as the dispersant.

(Foaming Agent)

The easy-to-dismantle adhesive material may include a foaming agent (excluding the thermally expandable foaming agent). The inclusion of the foaming agent enables formation of a foam layer with the foaming agent. When the easy-to-dismantle adhesive material contains the thermally expandable flame retardant or the thermally expandable foaming agent and the foaming agent described above, an intumescent layer is formed by the thermally expandable flame retardant or the thermally expandable foaming agent during combustion, and in addition, a foam layer can be formed by the foaming agent. For example, when the foaming temperature of the foaming agent is lower than the expansion temperature of the thermally expandable flame retardant or the thermally expandable foaming agent, a foam layer can be formed first with the foaming agent, and then an intumescent layer can be formed with the thermally expandable flame retardant or the thermally expandable foaming agent. Thus, the dismantling properties at the time of recycling can be more effectively exhibited.

The foaming agent foams when heated. Examples of the foaming agent include water; low-boiling hydrocarbons such as propane, butane, pentane, hexane, heptanes, cyclopropane, cyclobutane, cyclopentane, cyclohexane, and cycloheptane; chlorinated aliphatic hydrocarbon compounds such as dichloroethane, propylchloride, isopropylchloride, butylchloride, isobutylchloride, pentylchloride, and isopentylchloride; fluorinated compounds such as trichloromonofluoromethane and trichlorotrifluoroethane; hydrofluorocarbons such as $CHF_3$, $CH_2F_2$, and $CH_3F$; hydrochlorofluorocarbon compounds such as dichloromonofluoroethane (for example, HCFC141b (1,1-dichloro-1-fluoroethane)), HCFC22 (chlorodifluoromethane), HCFC142b (1-chloro-1,1-difluoroethane), HFC-245fa (1,1,1,3,3-pentafluoropropane), and HFC-365mfc (1, 1, 1,3,3-pentafluorobutane); hydrofluoroolefin compounds such as HFO-1233zd (trans-1-chloro-3,3,3-trifluoropropene), HFO-1234yf (2,3,3,3-tetrafluoro-1-propene), and HFO-1234ze (trans-1,3,3,3-tetrafluoropropene); ether compounds such diisopropyl ether; organic physical foaming agents such as a mixture of these compounds; and inorganic physical foaming agents such as nitrogen, oxygen, argon, carbon dioxide gases, and subcritical fluids and/or supercritical fluids thereof (the gases and the subcritical fluids/supercritical fluids may be mixed gases).

Of these, water and an organic physical foaming agents are preferable, and water and a hydrofluoroolefin compound are more preferable.

The content of the foaming agent is preferably in a range of 0.1 parts by mass or more and 40 parts by mass or less, and more preferably in a range of 0.1 parts by mass or more and 35 parts by mass or less, with respect to 100 parts by mass of the total mass of the adhesive thermoplastic resin and the polyethylene-based resin and/or the polypropylene-based resin that may be contained as necessary.

When the content of the foaming agent is 0.1 parts by mass or more, foaming is promoted, and when the content is 40 parts by mass or less, a foam is formed.

(Additional Flame Retardant or Flame Retardant Aid)

As an additional flame retardant or flame retardant aid, a known phosphorus-based flame retardant, bromine-based flame retardant, antimony-based flame retardant, or the like other than the thermally expandable flame retardant, or an organic or inorganic flame retardant or flame retardant aid containing no halogen is preferable. Examples of the flame retardant or the flame retardant aid include at least one selected from the group consisting of triazine ring-containing compounds, silicone-based flame retardants, metal hydroxides, metal oxides, boric acid compounds, and expandable graphite.

Examples of the triazine ring-containing compound include melamine, ammeline, benzoguanamine, acetoguanamine, phthalodiguanamine, melamine cyanurate, butylene diguanamine, norbornene diguanamine, methylene diguanamine, ethylene dimelamine, trimethylene dimelamine, tetramethylene dimelamine, hexamethylene dimelamine, and 1,3-hexylene dimelamine.

Examples of the silicone-based flame retardant include silicone oil, silicone rubber, and silicone resin.

Examples of the metal hydroxide include magnesium hydroxide, aluminum hydroxide, calcium hydroxide, barium hydroxide, zinc hydroxide, and KISMA 5A (trade name of magnesium hydroxide manufactured by Kyowa Chemical Industry Co., Ltd.).

Examples of the metal oxide include inorganic compounds such as zinc oxide, titanium oxide, aluminum oxide, magnesium oxide, titanium dioxide, and hydrotalcite, and surface-treated products thereof. Specific examples of the metal oxide include TIPAQUE R-680 (trade name of titanium oxide manufactured by ISHIHARA SANGYO KAISHA, LTD.), KYOWA MAG 150 (trade name of magnesium oxide manufactured by Kyowa Chemical Industry Co., Ltd.), DHT-4A (hydrotalcite: manufactured by Kyowa Chemical Industry Co., Ltd.), and ALCAMIZER 4 (trade name of zinc-modified hydrotalcite manufactured by Kyowa Chemical Industry Co., Ltd.).

Examples of the boric acid compound include zinc borate.

For these flame retardants or flame retardant aids, one type may be used alone, or two or more types may be used in combination.

(Additional Component)

The easy-to-dismantle adhesive material can contain an additional component as long as the effects of the present invention are not impaired. As the additional component, at least one selected from the group consisting of an inorganic fiber filler, an interfacial strength improver, an antioxidant, an ultraviolet absorber, a light stabilizer, and an anti-aging agent may be contained.

For example, the inorganic fiber filler may include at least one inorganic fiber filler selected from the group consisting of glass fibers and carbon fibers. One type of inorganic fiber filler may be used alone, or two or more types thereof may be used in combination.

The interfacial strength improver is preferably a polymer having an olefin skeleton (excluding modified polyolefin resin and copolymer) particularly from the viewpoint of compatibility with a modified polyolefin-based resin suitable as the adhesive thermoplastic resin. When the olefin skeleton is compatible with the modified polyolefin-based resin, interfacial strength further improves. Examples of a commercially available product of the interfacial strength improver include UMEX 1001 and 1010 (manufactured by Sanyo Chemical Industries, Ltd.), and Kayabrid 002PP and 003PP (manufactured by KAYAKU NOURYON CORPORATION).

Examples of the antioxidant include phenol-based antioxidants, phosphorus-based antioxidants, and thioether-based antioxidants.

Examples of the ultraviolet absorber include 2-hydroxybenzophenones, 2-(2'-hydroxyphenyl)benzotriazoles, benzoates, substituted oxanilides, cyanoacrylates, and triaryltriazines.

As the light stabilizer, a hindered amine-based compound can be used.

In addition to the above, the easy-to-dismantle adhesive material may contain a plasticizer, a fluorine-containing dropping inhibitor, or an additive that is usually used, for example, a crosslinking agent, an antistatic agent, a metal soap, a filler, an antifogging agent, a plate-out inhibitor, a surface treatment agent, a fluorescent agent, an antifungal agent, a disinfectant, a foaming agent, a metal deactivator, a release agent, a pigment, a processing aid, or the like within a range in which the effect of the present invention is not impaired.

(Method for Producing Easy-to-Dismantle Adhesive Material)

Any method is employed to produce the easy-to-dismantle adhesive material. Examples thereof include a method in which an adhesive thermoplastic resin, a thermally expandable flame retardant, a thermally expandable foaming agent, a dispersant, and as necessary, a polyethylene-based resin, a polypropylene-based resin, an additional flame retardant or flame retardant aid, and additional components are sufficiently mixed using a preliminary mixing means such as a V-type blender, a Henschel mixer, a mechanochemical device, or an extrusion mixer, optionally granulated by an extrusion granulator, a briquetting machine, or the like, and then melt-kneaded by a melt-kneader and extruded.

The easy-to-dismantle adhesive material may be produced by one step of putting all the raw materials into the extruder at one time and melt-kneading them, or by two steps of kneading in advance only some raw materials, for example, resin components, more specifically, an adhesive thermoplastic resin, a polyethylene-based resin, and a polypropylene-based resin to prepare a mixture, and melt-kneading the mixture as a raw material with a thermally expandable flame retardant, a thermally expandable foaming agent, and a dispersant.

Examples of the melt-kneading machine include a twin-screw extruder such as a vent-type twin-screw extruder, a Banbury mixer, a kneading roll, a single-screw extruder, a multi-screw extruder having three or more screws, and the like.

The temperature at the time of melt-kneading is, for example, 170°C or more and 260°C or less.

The easy-to-dismantle adhesive material extruded as described above is directly cut and pelletized by a device such as a pelletizer, or cooled to form a strand, and then the strand is cut and pelletized by a device such as a pelletizer.

<Resin Battery Housing>

The resin battery housing (hereinafter, it may be referred to as the resin housing) in the battery pack of the present invention is not particularly limited, and at least one of a thermosetting resin and a thermoplastic resin can be used. Of these, thermoplastic resins are particularly preferable. That is, the resin housing is preferably formed of a molded body containing a thermoplastic resin. Examples of the thermoplastic resin include a polyolefin resin, a polycarbonate resin, a polyester resin, an acrylonitrile styrene resin, an ABS resin, a polyamide resin, and modified polyphenylene oxide. Of these, a polyolefin resin, a polyester resin, and a polyamide resin are preferable, and in particular, at least one selected from the group consisting of polypropylene, polyethylene terephthalate, and nylon is preferable, and polypropylene is more preferably contained.

The thickness of the resin housing is not particularly limited, and is, for example, 5 μm or more and 200 μm or less.

In the resin housing, a liquid and a heat insulating material are tightly sealed (sealed) in the housing by annularly joining the peripheral edges of two exterior bodies by heat fusion, adhesion, or the like. Alternatively, one resin housing may be bent, and the peripheral edge may be joined by heat fusion, adhesion, or the like to tightly seal (seal) the liquid and the heat insulating material. The resin housing preferably has flexibility (elasticity), but it does not have flexibility in some cases.

The internal air pressure of the resin housing is preferably lower than the external air pressure from the viewpoint of sufficiently increasing the opening temperature. Thus, it is particularly preferable to perform vacuum sealing when sealing the resin housing.

<Metal Plate>

In general, the metal plate in the battery pack of the present invention is not particularly limited as long as it is a metal used as a cooling plate of a battery. For example, a metal having high thermal conductivity such as SUS, aluminum, or copper is suitably used.

The thickness of the metal plate is preferably in a range of 0.5 mm or more and 5 mm or less, more preferably in a range of 1 mm or more and 3 mm or less. When the thickness is equal to or more than the lower limit, heat conduction is sufficiently performed, and a cooling effect of the battery cell is sufficient. On the other hand, when the thickness is equal to or less than the upper limit, it is preferable from the viewpoint of weight reduction of the battery.

<Battery Cell>

The battery cell in the battery pack of the present invention is not particularly limited, but is usually configured by housing a positive electrode, a negative electrode, a separator, and an electrolytic solution in the battery cell.

Examples of the material of the battery cell include metals such as iron, aluminum, and an aluminum alloy; and a laminate film. The material of the battery cell is preferably metal or a laminate film from the viewpoint of weight reduction and cost, and more preferably iron from the viewpoint of pressure resistance.

The positive electrode contains a positive electrode active material on at least a part of the surface of the current collector. The positive electrode active material is not particularly limited as long as it can electrochemically occlude and release metal ions.

Examples of the positive electrode active material include a lithium transition metal-based compound, a sodium transition metal-based compound, and a potassium transition metal-based compound. One type of positive electrode active material may be used alone, or two or more types thereof may be used in any combination and proportions. From the viewpoint of increasing the energy density of the battery, the positive electrode active material is preferably a lithium transition metal-based compound, a sodium transition metal-based compound, or a potassium transition metal-based compound, more preferably a lithium transition metal-based compound, still more preferably a lithium transition metal composite oxide.

Examples of the structure of the lithium transition metal composite oxide include a spinel structure, an olivine structure, and a layered structure. The structure of the lithium transition metal composite oxide is preferably a spinel structure, an olivine structure, or a layered structure from the viewpoint of the capacity and durability of the battery, and more preferably a layered structure from the viewpoint of increasing the battery capacity.

Examples of the material of the current collector of the positive electrode include metal materials such as aluminum, stainless steel, nickel plating, titanium, and tantalum. The material of the current collector of the positive electrode is preferably aluminum from the viewpoint of increasing the energy density of the battery.

The negative electrode contains a negative electrode active material on at least a part of the surface of the current collector. The negative electrode active material is not particularly limited as long as it can electrochemically occlude and release metal ions.

Examples of the negative electrode active material include a carbon-based material and a metal material. One type of negative electrode active material may be used alone, or two or more types thereof may be used in any combination and proportions. The negative electrode active material is preferably a carbon-based material, a metal material, or a mixture of a carbon-based material and a metal material from the viewpoint of cycle characteristics and continuous charge characteristics.

Examples of the carbon-based material to be the negative electrode active material include natural graphite such as uncoated natural graphite, amorphous carbon-coated natural graphite, graphite-coated natural graphite, and resin-coated natural graphite; artificial graphite; and amorphous carbon. One type of the carbon-based material may be used alone, or two or more types thereof may be used in any combination and proportions. The carbon-based material is preferably natural graphite from the viewpoint of increasing the battery capacity.

Examples of the natural graphite include vein natural graphite, flake natural graphite, and natural graphite prepared by subjecting these types of graphite to a treatment such as spheroidization or densification. One type of the natural graphite may be used alone, or two or more types thereof may be used in any combination and proportions. The natural graphite is preferably spheroidized natural graphite from the viewpoint of filling properties and charge-discharge rate characteristics.

The metal material to be the negative electrode active material is a material containing a metal element and/or a metalloid element capable of being alloyed with an alkali metal, and is preferably an oxide of silicon, silicon oxide, or silicon carbide from the viewpoint of increasing the capacity.

Examples of the material of the current collector of the negative electrode include metal materials such as aluminum, copper, nickel, stainless steel, and nickel-plated steel. The material of the current collector of the negative electrode is preferably copper from the viewpoint that it should not be alloyed with an alkali metal and be inexpensive.

The material of the separator is preferably polyethylene, polypropylene, cellulose, or polyvinylidene fluoride, more preferably polyethylene or polypropylene.

The form of the separator is preferably a porous film or a nonwoven fabric, more preferably a porous film.

The electrolytic solution usually contains an electrolyte and a nonaqueous solvent.

The electrolyte is preferably an alkali metal salt from the viewpoint of enhancing solubility, more preferably a lithium salt, a sodium salt, or a potassium salt, still more preferably a lithium salt, from the viewpoint of improving cycle characteristics. Examples of the lithium salt include a lithium fluoroborate salt, a lithium fluorophosphate salt, a lithium tungstate salt, a lithium carboxylate salt, a lithium sulfonate salt, a lithium imide salt, a lithium methide salt, a lithium oxalate salt, and a fluorine-containing organic lithium salt. One type of the lithium salt may be used alone, or two or more types thereof may be used in any combination and proportions. The lithium salt is preferably $LiBF_4$, $LiPF_6$, $Li_2PO_3F$, $LiPO_2F_2$, $LiFSO_3$, $CH_3SO_3Li$, $CF_3SO_3Li$, $CH_3SO_4Li$, $CF_3SO_4Li$, $C_2H_5SO_4Li$, $C_2F_5SO_4Li$, $C_3H_5SO_4Li$, $C_3H_3SO_4Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethanedisulfonylimide, lithium cyclic 1,3-perfluoropropanedisulfonylimide, $LiC(FSO_2)_3$, $LiC(CF_3SO_2)_3$, $LiC(C_2F_5SO_2)_3$, lithium difluorooxalate borate, lithium bis(oxalate)borate, lithium tetrafluorooxalate phosphate, lithium difluorobis(oxalate)phosphate, or lithium tris(oxalate) phosphate from the viewpoint of improving low-temperature output characteristics, high-rate charge-discharge characteristics, impedance characteristics, high-temperature storage characteristics, and cycle characteristics, more preferably $LiBF_4$, $LiPF_6$, $LiPO_2F_2$, $LiN(FSO_2)_2$, lithium bis(oxalate)borate, or $LiFSO_3$ from the viewpoint of further improving low-temperature output characteristics, high-rate charge-discharge characteristics, impedance characteristics, high-temperature storage characteristics, and cycle characteristics, still more preferably $LiPF_6$ from the viewpoint of further improving low-temperature output characteristics, high-rate charge-discharge characteristics, impedance characteristics, high-temperature storage characteristics, and cycle characteristics.

The nonaqueous solvent is preferably an organic solvent from the viewpoint of suppressing redox decomposition in the battery. Examples of the organic solvent include saturated cyclic carbonates, linear carbonates, linear carboxylic acid esters, cyclic carboxylic acid esters, ether-based compounds, and sulfone-based compounds. One type of the organic solvent may be used alone, or two or more types thereof may be used in any combination and proportions. The organic solvent is preferably a saturated cyclic carbonate, a chain carbonate, a chain carboxylic acid ester, a cyclic carboxylic acid ester, an ether-based compound, or a sulfone-based compound, more preferably a saturated cyclic carbonate, a chain carbonate, or a chain carboxylic acid ester, from the viewpoint of suppressing redox decomposition in the battery.

The electrolytic solution may contain an additional compound other than the electrolyte and the nonaqueous solvent. Examples of the additional compound include unsaturated cyclic carbonates, fluorine-containing cyclic carbonates, isocyanate group-containing organic compounds, isocyanuric acid skeleton-containing organic compounds, sulfur-containing organic compounds, phosphorus-containing organic compounds, silicon-containing compounds, aromatic compounds, cyano group-containing organic compounds, acid anhydride compounds, and triple bond-containing compounds. One type of the additional compound may be used alone, or two or more types thereof may be used in any combination and proportions. The additional compound is preferably an unsaturated cyclic carbonate, a fluorine-containing cyclic carbonate, an isocyanate group-containing organic compound, an isocyanuric acid skeleton-containing organic compound, a sulfur-containing organic compound, a phosphorus-containing organic compound, a silicon-containing compound, an aromatic compound, a cyano group-containing organic compound, an acid anhydride compound, or a triple bond-containing compound, more preferably an unsaturated cyclic carbonate, a fluorine-containing cyclic carbonate, an isocyanate group-containing organic compound, or an isocyanuric acid skeleton-containing organic compound, still more preferably an unsaturated cyclic carbonate or a fluorine-containing cyclic carbonate, from the viewpoint of improving low-temperature output characteristics, high-rate charge-discharge characteristics, impedance characteristics, high-temperature storage characteristics, and cycle characteristics.

[Use of Adhesive Sheet]

In a use of the adhesive sheet of the present invention, the adhesive sheet is used in a battery pack including the resin housing for storing the battery cell, the metal plate installed in the housing, and the adhesive sheet. More specifically, the adhesive sheet causes the resin housing and the metal plate to adhere to each other, and the adhesive sheet contains the easy-to-dismantle adhesive material, and is required to have high adhesive strength because of adhesion of different materials. The metal plate is a material for releasing heat generated in the battery cell.

On the other hand, when an old battery is disassembled, and a part is taken out and recycled, high adhesive strength is disadvantageous. For this, in the present invention, the adhesive sheet is designed to be easily disassembled by heating, the resin housing and the metal plate are separated by heating, and the respective materials can be easily recycled. Details will be described later.

The adhesive sheet preferably has an adhesive strength reduction rate represented by Formula (1) of 15% or more before and after heating when heated at 285°C for 5 minutes:

((adhesive strength before heating - adhesive strength after heating)/adhesive strength before heating) $\times$ 100     (1).

The adhesive sheet preferably has a thermal diffusivity reduction rate represented by Formula (2) of 4.5% or more before and after heating when heated at 285°C for 5 minutes:

((thermal diffusivity before heating - thermal diffusivity after heating)/thermal diffusivity before heating) × 100      (2).

In the use of the adhesive sheet according to the present invention, as described above, by using the adhesive sheet as the adhesive sheet for bonding the resin housing and the metal plate, the adhesiveness between the resin battery case (housing) and the metal plate (cooling plate) is good at the time of use, and the metal plate can be easily peeled off from the housing at the time of disassembly.

[Recycling Method]

In the recycling method of the present invention, the resin housing and the metal plate are recycled from the battery pack including the resin housing for storing the battery cell, the metal plate installed in the housing, and the adhesive sheet. This is a method in which the adhesive sheet for bonding the resin housing and the metal plate includes an easy-to-dismantle adhesive material, the housing and the metal plate are peeled off, and the respective materials are recycled.

The method for peeling off the housing and the metal plate can be appropriately determined according to the easy-to-dismantle adhesive material. Examples of the method include a method of irradiating an active energy ray such as an ultraviolet ray or an electron beam, which gives a temperature change such as heating or cooling. Of these, the heat treatment is preferable from the viewpoint of easy handling. That is, an aspect in which the housing and the metal plate are peeled off by heating is preferable from the viewpoint of easy handling.

Heating conditions include an appropriate heating temperature and heating time, and the heating temperature is not particularly limited as long as it is a temperature at which the resin housing and the metal plate are separated according to the material of the adhesive sheet. For example, the temperature may be 200°C or more and 350°C or less, and is preferably 250°C or more and 320°C or less, and more preferably 270°C or more and 300°C or less from the viewpoint that the easy-to-dismantle adhesive material is easily dismantled. The heating time is not particularly limited as long as the effect of the present invention is exhibited, and is, for example, 1 minute or more and 20 minutes or less, more preferably 3 minutes or more and 7 minutes or less.

Examples

The present invention will next be described in detail by way of Examples, but the present invention is not limited by the Examples. In particular, the easy-to-dismantle adhesive material according to the present invention may be produced by one step of putting all the raw materials into an extruder at a time and melt-kneading them, or by two steps of kneading in advance only some raw materials, for example, resin components (adhesive thermoplastic resin, polyethylene-based resin, polypropylene-based resin) to prepare a mixture, and melt-kneading the mixture as a raw material with a thermally expandable material or a dispersant.

(Evaluation Method)

1. Thermal Diffusivity Reduction Rate

The thermal diffusivity before and after heating was measured by the following method, and the reduction rate of the thermal diffusivity before and after heating was calculated.

(Thermal Diffusivity)

For a test piece for thermal diffusivity described later, the thermal diffusivity in a thickness direction of the test piece for thermal diffusivity was measured at a measurement temperature of 25°C through a laser flash method measurement using an Xe flash analyzer LFA447 Nanoflash available from NETZSCH Japan K.K., and the measured thermal diffusivity was taken as the thermal diffusivity before heating. For the thermal diffusivity ($mm^2$/sec), there is no JIS standard related to the thermal diffusivity and thermal conductivity of a resin-based material. Thus, reference is made to JIS R1611:2010 (Method for measuring thermal diffusivity, specific heat capacity, and thermal conductivity of fine ceramics by flash method). Since this standard specifies "The thickness of the sample is 0.5 mm or more and 5 mm or less", the thickness of the test piece was set to 1.0 mm as described later.

Subsequently, the test piece for thermal diffusivity was heated at 285°C for 5 minutes and held at room temperature (25°C) overnight, and then the thermal diffusivity was measured in the same manner as described above and taken as the thermal diffusivity after heating.

(Reduction Rate of Thermal Diffusivity)

The reduction rate of the thermal diffusivity was calculated based on Formula (2) shown below.

Reduction rate of thermal diffusivity (%) = ((thermal diffusivity before heating - thermal diffusivity after heating)/ thermal diffusivity before heating) $\times$ 100          (2)

2. Adhesive Strength Reduction Rate

The adhesive strength before and after heating was measured by the following method, and the reduction rate of the adhesive strength before and after heating was calculated.

(Adhesive Strength)

A test piece for adhesive strength to be described later was sandwiched between aluminum plates (standard test plate A5052P manufactured by Nippon Testpanel Co., Ltd.) having a length of 100 mm $\times$ a width of 25 mm $\times$ a thickness of 1.6 mm, and press-bonded at 160°C. The peel strength between the test piece for adhesive strength and the aluminum plate was measured in accordance with JIS K6850-1999 <Test method for tensile shear adhesive strength of adhesive-rigid adherend> using a 200X-type universal tester manufactured by Intesron Corporation. The measurement was performed three times for one sample, and the average value thereof was taken as the adhesive strength before heating.
Subsequently, the test piece for adhesive strength sandwiched between the aluminum plates was heated at 285°C for 5 minutes and held at room temperature (25°C) overnight, and then the peel strength was measured in the same manner as described above. Also in the measurement after heating, the measurement was performed three times for one sample, and the average value thereof was taken as the adhesive strength after heating.

(Reduction Rate of Adhesive Strength)

The reduction rate of the adhesive strength was calculated based on Formula (1) shown below.

Reduction rate of adhesive strength (%) = ((adhesive strength before heating - adhesive strength after heating)/adhesive strength before heating) $\times$ 100          (1)

3. Evaluation of Peelability

A test piece for adhesive strength to be described later was sandwiched between an aluminum plate (standard test plate A5052P manufactured by Nippon Testpanel Co., Ltd.) having a length of 100 mm $\times$ a width of 25 mm $\times$ a thickness of 1.6 mm and a glass mat reinforced thermoplastic (GMT) plate ("GMT eFR" manufactured by Mitsubishi Chemical Advanced Materials AG) having a length of 100 mm $\times$ a width of 25 mm $\times$ a thickness of 2.5 mm, and was press-bonded by setting the temperature of the hot plate on the aluminum plate side to 160°C and setting the temperature on the GMT plate side to 120°C.
Subsequently, the test piece for adhesive strength sandwiched between the aluminum plate and the GMT plate was heated at 285°C for 5 minutes and held at room temperature (25°C) overnight, and then the peelability was evaluated according to the following.
A (good): The aluminum plate and the GMT plate could be easily peeled off from the heated sample by hand.
B (poor): The aluminum plate and the GMT plate could not be easily peeled off from the heated sample by hand.

(Raw Material of Adhesive Sheet)

(A-1) Modified polyolefin-based resin

Modified polyolefin-based resin formed of binary copolymer produced through graft polymerization of maleic acid onto a polyolefin-based resin ("MODIC X2036H" manufactured by Mitsubishi Chemical Corporation, MFR (180°C, load 2.16 kg, 1 mm diameter orifice): 0.5 g/10 min, melting point; 125°C)

(A-2) Modified polyolefin-based resin

Modified propylene-based polymer produced through graft modification of a commercially available propylene homopolymer [MFR (230°C, load 2.16 kg, 2 mm diameter orifice): 10.0 g/10 min, melting point: 162°C] with maleic anhydride [modification ratio (graft ratio): 2.5 mass%, MFR (180°C, load 2.16 kg, 1 mm diameter orifice): 300 g/10 min, melting point: 158°C]

(A-3) Modified polyolefin-based resin

Modified propylene-based polymer produced through graft modification of 56 mass% of a commercially available propylene-ethylene random copolymer [MFR (230°C, load 2.16 kg, 2 mm diameter orifice): 7 g/10 min, melting point: 135°C] and 44 mass% of a commercially available propylene-ethylene random copolymer [MFR (230°C, load 2.16 kg, 2 mm diameter orifice): 8 g/10 min, melting point: 59°C] with maleic anhydride [modification ratio (graft ratio): 0.9 mass%, MFR (180°C, load 2.16 kg, 1 mm diameter orifice): 8 g/10 min, melting point: 132°C]

(A-4) Modified polyolefin-based resin

Modified propylene-based polymer produced through graft modification of 60 mass% of a commercially available propylene-ethylene random copolymer [MFR (230°C, load 2.16 kg, 2 mm diameter orifice): 30 g/10 min, melting point: 143°C], 20 mass% of a commercially available propylene-ethylene random copolymer [MFR (230°C, load 2.16 kg, 2 mm diameter orifice): 7 g/10 min, melting point: 135°C], and 20 mass% of a commercially available propylene-ethylene random copolymer [MFR (230°C, load 2.16 kg, 2 mm diameter orifice): 3 g/10 min, melting point: 95°C] with maleic anhydride [modification ratio (graft ratio): 0.9 mass%, MFR (180°C, load 2.16 kg, 1 mm diameter orifice): 11 g/10 min, melting point: 136°C]

(B-a) Thermally expandable flame retardant

Phosphorus-based flame retardant (ADK STAB FP-2500S manufactured by ADEKA Corporation, an intumescent flame retardant containing from 50 to 60 mass% of piperazine pyrophosphate, from 35 to 45 mass% of melamine pyrophosphate, and from 3 to 6 mass% of zinc oxide, with respect to the total mass of the phosphorus-based flame retardant composition)

(B-b) Thermally expandable foaming agent

Thermally expandable microcapsules ("KUREHA Microsphere MB-S6LC" manufactured by KUREHA CORPORATION in Examples) enclosing a foaming component (hydrocarbon) in an acrylic resin were used. MB-S6LC is a master batch of the thermally expandable foaming agent and low-density polyethylene (LDPE: (D-2) polyethylene-based resin), and MB-S6LC contains 50 mass% of the thermally expandable foaming agent with respect to the total mass of the MB-S6LC.

(C) Dispersant

α-Olefin-maleic anhydride copolymer (DIACARNA 30M, available from Mitsubishi Chemical Corporation, weight average molecular weight: 7800)

(D-1) Polyethylene-based resin

Low-density polyethylene [MFR (190°C, load 2.16 kg, 2 mm diameter orifice): 4 g/10 min, melting point: 107°C]

(D-2) Polyethylene-based resin

Low-density polyethylene (LDPE)

(E-1) Polypropylene-based resin

Propylene homopolymer [MFR (230°C, load 21.2 N, orifice 2 mm diameter): 11.0 g/10 min, melting point: 170°C]

(E-2) Polypropylene-based resin

Propylene-ethylene random copolymer [MFR (230°C, load 21.2 N, orifice 2 mm diameter): 20 g/10 min, melting point: 145°C]

(E-3): Polypropylene-based resin

Propylene-ethylene random copolymer [MFR (230°C, load 21.2 N, orifice 2 mm diameter): 2 g/10 min, melting point: 125°C]

(E-4): Polypropylene-based resin

Propylene-ethylene random copolymer [MFR (230°C, load 21.2 N, orifice 2 mm diameter): 3 g/10 min, melting point: 95°C]

Example 1

The modified polyolefin-based resin (A-1), the thermally expandable flame retardant (B-a), and the dispersant (C) were mixed by hand blending so that the respective raw materials were in the ratios shown in Table 1 below. Thereafter, the mixture was melt-kneaded under conditions of a screw rotation speed of 250 rpm and a cylinder temperature of 200°C using a φ30 mm unidirectional twin-screw extruder (model name: "BT-30", manufactured by Plastic Engineering Laboratory Co., Ltd., L/D = 30), whereby a pellet-like easy-to-dismantle adhesive material (hereinafter, it may be referred to as the present pellet) was produced. "L/D" represents the ratio between the length (L) and the diameter (D) of the screw.
Next, the following molded body (adhesive sheet) was produced using the present pellets, and each evaluation was performed. The evaluation results are shown in Table 1.
The resulting pellets were press-molded under the conditions of a molding temperature of 200°C and a molding pressure of 3.0 MPa using a 40 t high-performance high-temperature vacuum press (model name "VH1-1747", manufactured by KITAGAWA SEIKI CO., LTD.) whereby an adhesive sheet (length 200 mm × width 150 mm × thickness 1.0 mm) was produced. The adhesive sheet was cut into a length of 10 mm × a width of 10 mm to prepare a test piece for thermal diffusivity.
The resulting pellets were press-molded under the conditions of a molding temperature of 200°C and a molding pressure of 3.0 MPa using a 40 t high-performance high-temperature vacuum press (model name "VH1-1747", manufactured by KITAGAWA SEIKI CO., LTD.) whereby an adhesive sheet (length 200 mm × width 150 mm × thickness 1.6 mm) was produced. The adhesive sheet was cut into a strip shape of 12.5 mm in length × 25 mm in width to prepare a test piece for adhesive strength.

Example 2

8 mass% of the modified polyolefin-based resin (A-2), 5 mass% of the polyethylene-based resin (D-1), 5 mass% of the polypropylene-based resin (E-1), and 82 mass% of the polypropylene-based resin (E-2) were mixed in advance by dry blending, and melt-kneaded at a temperature of 200°C, a screw rotation speed of 300 rpm, and an extrusion rate of 20 kg/h using a twin-screw extruder TEX25 (manufactured by JSW), extruded into a strand, cooled, and then cut, whereby a pellet-shaped mixture was produced.
Thereafter, a molded body (adhesive sheet) was produced and evaluated in the same manner as in Example 1 except for using the mixture in place of (A-1) in Example 1. The composition of the final easy-to-dismantle adhesive material and the evaluation results thereof are shown in Table 1.

Example 3

A molded body (adhesive sheet) was produced and evaluated in the same manner as in Example 1 except for using 89.5 mass% of the modified polyolefin-based resin (A-1), 10 mass% of MB-S6LC (that is, 5 mass% of the thermally expandable foaming agent (B-b) and 5 mass% of LDPE that is the polyethylene-based resin (D-2)), and 0.5 mass% of the dispersant (C). The composition of the final easy-to-dismantle adhesive material and the evaluation results thereof are shown in Table 1.

Example 4

8 mass% of the modified polyolefin-based resin (A-2), 5 mass% of the polyethylene-based resin (D-1), 5 mass% of the polypropylene-based resin (E-1), and 82 mass% of the polypropylene-based resin (E-2) were mixed in advance by dry blending, and melt-kneaded at a temperature of 200°C, a screw rotation speed of 300 rpm, and an extrusion rate of 20 kg/h using a twin-screw extruder TEX25 (manufactured by JSW), extruded into a strand, cooled, and then cut, whereby a pellet-shaped mixture was produced.

Thereafter, a molded body (adhesive sheet) was produced and evaluated in the same manner as in Example 3 except for using the mixture in place of (A-1) in Example 3. The composition of the final easy-to-dismantle adhesive material and the evaluation results thereof are shown in Table 1.

Example 5

3 mass% of the modified polyolefin-based resin (A-2), 15 mass% of the modified polyolefin-based resin (A-3), 10 mass% of the polyethylene-based resin (D-1), 20 mass% of the polypropylene-based resin (E-3), and 52 mass% of the polypropylene-based resin (E-4) were mixed in advance by dry blending, and melt-kneaded at a temperature of 200°C, a screw rotation speed of 300 rpm, and an extrusion rate of 20 kg/h using a twin-screw extruder TEX25 (manufactured by JSW), and extruded onto a strand, cooled, and cut, whereby a pellet-shaped mixture was produced.

Thereafter, a molded body (adhesive sheet) was produced and evaluated in the same manner as in Example 3 except for using the mixture in place of (A-1) in Example 3. The composition of the final easy-to-dismantle adhesive material and the evaluation results thereof are shown in Table 1.

Example 6

30 mass% of the modified polyolefin-based resin (A-4), 10 mass% of the polyethylene-based resin (D-1), 15 mass% of the polypropylene-based resin (E-3), and 45 mass% of the polypropylene-based resin (E-4) were mixed in advance by dry blending, and melt-kneaded at a temperature of 200°C, a screw rotation speed of 300 rpm, and an extrusion rate of 20 kg/h using a twin-screw extruder TEX25 (manufactured by JSW), extruded into a strand, cooled, and then cut, whereby a pellet-shaped mixture was produced.

Thereafter, a molded body (adhesive sheet) was produced and evaluated in the same manner as in Example 3 except for using the mixture in place of (A-1) in Example 3. The composition of the final easy-to-dismantle adhesive material and the evaluation results thereof are shown in Table 1.

Comparative Example 1

A molded body (adhesive sheet) was produced using 100 mass% of the modified polyolefin-based resin (A-1), and each evaluation was performed. The composition of the final easy-to-dismantle adhesive material and the evaluation results thereof are shown in Table 1.

Comparative Example 2

8 mass% of the modified polyolefin-based resin (A-2), 5 mass% of the polyethylene-based resin (D-1), 5 mass% of the polypropylene-based resin (E-1), and 82 mass% of the polypropylene-based resin (E-2) were mixed in advance by dry blending, and melt-kneaded at a temperature of 200°C, a screw rotation speed of 300 rpm, and an extrusion rate of 20 kg/h using a twin-screw extruder TEX25 (manufactured by JSW), extruded into a strand, cooled, and then cut, whereby a pellet-shaped mixture was produced.

Thereafter, a molded body (adhesive sheet) was produced using 100 mass% of the mixture, and each evaluation was performed. The composition of the final easy-to-dismantle adhesive material and the evaluation results thereof are shown in Table 1.

[Table 1]

Table 1

| | | | Example 1 | Example 2 | Example 3 | Example 4 | Example 5 | Example 6 | Comparative Example 1 | Comparative Example 2 |
|---|---|---|---|---|---|---|---|---|---|---|
| Composition (mass%) | | (A-1) | 58 | - | 89.5 | - | - | - | 100 | - |
| | | (A-2) | - | 4.6 | - | 7.1 | 2.7 | - | - | 8 |
| | | (A-3) | - | - | - | - | 13.4 | - | - | - |
| | | (A-4) | - | - | - | - | - | 26.8 | - | - |
| | | (B-a) | 40 | 40 | - | - | - | - | - | - |
| | | (B-b) | - | - | 5 | 5 | 5 | 5 | - | - |
| | | (C) | 2 | 2 | 0.5 | 0.5 | 0.5 | 0.5 | - | - |
| | | (D-1) | - | 2.9 | - | 4.5 | 9 | 9 | - | 5 |
| | | (D-2) | - | - | 5 | 5 | 5 | 5 | - | - |
| | | (E-1) | - | 2.9 | - | 4.5 | - | - | - | 5 |
| | | (E-2) | - | 47.6 | - | 73.4 | - | - | - | 82 |
| | | (E-3) | - | - | - | - | 17.9 | 13.4 | - | - |
| | | (E-4) | - | - | - | - | 46.5 | 40.3 | - | - |
| Evaluation results | Thermal diffusivity (mm²/s) | Before heating | 0.147 | 0.201 | 0.104 | 0.151 | 0.117 | 0.11 | 0.103 | 0.159 |
| | | After heating | 0.139 | 0.191 | 0.090 | 0.098 | 0.088 | 0.097 | 0.106 | 0.152 |
| | Thermal diffusivity reduction rate (%) | | 5.44 | 4.98 | 13.50 | 35.10 | 24.79 | 11.82 | -2.9 | 4.40 |
| | Adhesive strength (MPa) | Before heating | 4.09 | 6.11 | 3.25 | 7.91 | 5.31 | 6.77 | 4.87 | 6.63 |
| | | After heating | 2.52 | 2.73 | 2.12 | 2.51 | 0.85 | 0.86 | 4.17 | 10.30 |
| | Adhesive strength reduction rate (%) | | 38.4 | 55.3 | 34.8 | 68.3 | 84.0 | 87.3 | 14.4 | -55.4 |
| | Evaluation of peelability | | A | A | A | A | A | A | B | B |

EP 4 773 346 A1

26

Industrial Applicability

The battery pack of the present invention has good adhesiveness between a resin battery case and a metal plate at the time of use, and has high environmental performance and high industrial value in that the resin housing and the metal plate are easily separated at the time of disassembly such as the time of disposal, and the fractionated resin material and metal material are recycled.

Reference Signs List

1 Battery pack
11 Battery cell
12 Spacer
13 Metal plate (cooling plate)
14 Adhesive sheet
15 Battery housing

**Claims**

1. A battery pack comprising:

   a resin housing that stores a battery cell;
   a metal plate installed in the resin housing; and
   an adhesive sheet that bonds the resin housing and the metal plate, the adhesive sheet containing an easy-to-dismantle adhesive material.

2. The battery pack according to claim 1, wherein the adhesive sheet has an adhesive strength reduction rate represented by Formula (1) of 15% or more before and after heating when heated at 285°C for 5 minutes:

   $$((\text{adhesive strength before heating} - \text{adhesive strength after heating})/\text{adhesive strength before heating}) \times 100 \tag{1}$$

3. The battery pack according to claim 1 or 2, wherein the adhesive sheet has a thermal diffusivity reduction rate represented by Formula (2) of 4.5% or more before and after heating when heated at 285°C for 5 minutes:

   $$((\text{thermal diffusivity before heating} - \text{thermal diffusivity after heating})/\text{thermal diffusivity before heating}) \times 100 \tag{2}$$

4. The battery pack according to claim 1 or 2, wherein the easy-to-dismantle adhesive material contains a modified polyolefin-based resin.

5. The battery pack according to claim 1 or 2, wherein the easy-to-dismantle adhesive material contains a thermally expandable flame retardant and/or a thermally expandable foaming agent.

6. The battery pack according to claim 4, wherein the modified polyolefin-based resin is graft-modified with an unsaturated carboxylic acid and/or a derivative thereof.

7. The battery pack according to claim 5, wherein the thermally expandable flame retardant contains a phosphorus-based flame retardant.

8. The battery pack according to claim 5, wherein the thermally expandable flame retardant contains an intumescent flame retardant.

9. The battery pack according to claim 5, wherein the thermally expandable foaming agent contains a chemical foaming agent and/or a physical foaming agent, and a thermoplastic resin capsule enclosing the chemical foaming agent and/or the physical foaming agent.

10. The battery pack according to claim 5, wherein the easy-to-dismantle adhesive material further contains a dispersant.

11. The battery pack according to claim 10, wherein the dispersant contains a copolymer of an $\alpha$-olefin and an unsaturated carboxylic acid.

12. The battery pack according to claim 4, wherein the easy-to-dismantle adhesive material further contains a polyethylene-based resin and/or a polypropylene-based resin.

13. The battery pack according to claim 1 or 2, wherein the resin housing comprises a molded body containing a thermoplastic resin.

14. The battery pack according to claim 13, wherein the thermoplastic resin contains at least one selected from the group consisting of polypropylene, polyethylene terephthalate, and nylon.

15. A use of an adhesive sheet in a battery pack including a resin housing that stores a battery cell, a metal plate installed in the resin housing, and the adhesive sheet,
the adhesive sheet bonding the resin housing and the metal plate, and the adhesive sheet containing an easy-to-dismantle adhesive material.

16. The use of an adhesive sheet according to claim 15, wherein the adhesive sheet has an adhesive strength reduction rate represented by Formula (1) of 15% or more before and after heating when heated at 285°C for 5 minutes:

$$\text{((adhesive strength before heating - adhesive strength after heating)/adhesive strength before heating)} \times 100 \qquad (1).$$

17. The use of an adhesive sheet according to claim 15 or 16, wherein the adhesive sheet has a thermal diffusivity reduction rate represented by Formula (2) of 4.5% or more before and after heating when heated at 285°C for 5 minutes:

$$\text{((thermal diffusivity before heating - thermal diffusivity after heating)/thermal diffusivity before heating)} \times 100 \qquad (2).$$

18. The use of an adhesive sheet according to claim 15 or 16, wherein the easy-to-dismantle adhesive material contains a modified polyolefin-based resin.

19. The use of an adhesive sheet according to claim 15 or 16, wherein the easy-to-dismantle adhesive material contains a thermally expandable flame retardant and/or a thermally expandable foaming agent.

20. The use of an adhesive sheet according to claim 18, wherein the modified polyolefin-based resin is graft-modified with an unsaturated carboxylic acid and/or a derivative thereof.

21. The use of an adhesive sheet according to claim 19, wherein the thermally expandable flame retardant contains a phosphorus-based flame retardant.

22. The use of an adhesive sheet according to claim 19, wherein the thermally expandable flame retardant contains an intumescent flame retardant.

23. The use of an adhesive sheet according to claim 19, wherein the thermally expandable foaming agent contains a chemical foaming agent and/or a physical foaming agent, and a thermoplastic resin capsule enclosing the chemical foaming agent and/or the physical foaming agent.

24. The use of an adhesive sheet according to claim 19, wherein the easy-to-dismantle adhesive material further contains a dispersant.

25. The use of an adhesive sheet according to claim 24, wherein the dispersant contains a copolymer of an $\alpha$-olefin and an unsaturated carboxylic acid.

26. The use of an adhesive sheet according to claim 18, wherein the easy-to-dismantle adhesive material further contains a polyethylene-based resin and/or a polypropylene-based resin.

27. A recycling method comprising recycling a resin housing and a metal plate from a battery pack including the resin housing that stores a battery cell, the metal plate installed in the resin housing, and an adhesive sheet, wherein

the adhesive sheet for bonding the resin housing and the metal plate contains an easy-to-dismantle adhesive material, and
the resin housing and the metal plate are peeled off and each recycled.

28. The recycling method according to claim 27, wherein the resin housing and the metal plate are peeled off by heating.

29. The recycling method according to claim 28, wherein the heating is performed at 200°C or more and 350°C or less for 1 minute or more and 20 minutes or less.

Fig. 1

## INTERNATIONAL SEARCH REPORT

| International application No. |
|---|
| **PCT/JP2024/031404** |

| A. | CLASSIFICATION OF SUBJECT MATTER |
|---|---|

*H01M 10/653*(2014.01)i; *H01M 10/613*(2014.01)i; *H01M 10/651*(2014.01)i; *H01M 10/6554*(2014.01)i; *H01M 10/6555*(2014.01)i; *H01M 10/658*(2014.01)i; *H01M 50/204*(2021.01)i; *H01M 50/227*(2021.01)i; *H01M 50/293*(2021.01)i

FI: H01M10/653; H01M10/613; H01M10/651; H01M10/6554; H01M10/6555; H01M10/658; H01M50/204 401H; H01M50/227; H01M50/293

According to International Patent Classification (IPC) or to both national classification and IPC

| B. | FIELDS SEARCHED |
|---|---|

Minimum documentation searched (classification system followed by classification symbols)

H01M10/653; H01M10/613; H01M10/651; H01M10/6554; H01M10/6555; H01M10/658; H01M50/204; H01M50/227; H01M50/293

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 116487748 A (WUHAN POWER BATTERY REGENERATION TECHNOLOGY CO., LTD.) 25 July 2023 (2023-07-25)<br>paragraphs [0025]-[0028], fig. 1, 2 | 1-29 |
| Y | JP 2006-032225 A (JAPAN STORAGE BATTERY CO., LTD.) 02 February 2006 (2006-02-02)<br>paragraph [0014] | 1-29 |
| Y | JP 2000-353501 A (JAPAN STORAGE BATTERY CO., LTD.) 19 December 2000 (2000-12-19)<br>paragraph [0045] | 1-29 |
| Y | JP 2019-061959 A (SEKISUI CHEMICAL CO., LTD.) 18 April 2019 (2019-04-18)<br>paragraphs [0012]-[0015], [0027]-[0048], [0052]-[0056], fig. 1 | 3-5, 7, 9, 10, 12, 17-19, 21, 23, 24, 26 |

[✓] Further documents are listed in the continuation of Box C.  [✓] See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 October 2024** | **12 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/031404**

**C.    DOCUMENTS CONSIDERED TO BE RELEVANT**

| Category* | Citation of document, with indication, where appropriate, of the relevant passages | Relevant to claim No. |
|---|---|---|
| Y | JP 2009-289542 A (THE FURUKAWA BATTERY CO., LTD.) 10 December 2009 (2009-12-10)<br>paragraphs [0015], [0016] | 6, 20 |
| Y | JP 2015-189975 A (TOHO KABUSHIKI KAISHA) 02 November 2015 (2015-11-02)<br>paragraph [0014] | 8, 22 |
| Y | JP 3-195713 A (MITSUBISHI CHEMICAL CORPORATION) 27 August 1991 (1991-08-27)<br>page 2 | 11, 25 |
| A | JP 2005-209624 A (TOYOTA MOTOR CORPORATION) 04 August 2005 (2005-08-04)<br>entire text, all drawings | 1-29 |
| A | JP 2014-237074 A (FUJITSU LIMITED) 18 December 2014 (2014-12-18)<br>entire text, all drawings | 1-29 |

## INTERNATIONAL SEARCH REPORT
### Information on patent family members

International application No.

**PCT/JP2024/031404**

| Patent document cited in search report | | | Publication date (day/month/year) | Patent family member(s) | Publication date (day/month/year) |
|---|---|---|---|---|---|
| CN | 116487748 | A | 25 July 2023 | (Family: none) | |
| JP | 2006-032225 | A | 02 February 2006 | (Family: none) | |
| JP | 2000-353501 | A | 19 December 2000 | (Family: none) | |
| JP | 2019-061959 | A | 18 April 2019 | (Family: none) | |
| JP | 2009-289542 | A | 10 December 2009 | (Family: none) | |
| JP | 2015-189975 | A | 02 November 2015 | (Family: none) | |
| JP | 3-195713 | A | 27 August 1991 | (Family: none) | |
| JP | 2005-209624 | A | 04 August 2005 | US 2007/0082250 A1 entire text, all drawings CN 1898829 A | |
| JP | 2014-237074 | A | 18 December 2014 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021044122 A

**Non-patent literature cited in the description**

- Matsumoto Microsphere. Matsumoto Yushi-Seiyaku Co., Ltd.
- EXPANCEL. Japan Fillite Co., Ltd.
- Advancell EM series. EKISUI CHEMICAL CO., LTD.
- Microsphere. KUREHA CORPORATION